# EUROPEAN PATENT SPECIFICATION

(11) **EP 2 133 248 B1**
(45) Date of publication and mention of the grant of the patent: **13.04.2011**
(21) Application number: 09007676.1
(22) Date of filing: 10.06.2009
(51) Int. Cl.: B60T 13/57

(54) **Vacuum pressure booster**
Vakuumbremskraftverstärker
Servomoteur d'assistance pneumatique

(30) Priority: 11.06.2008 JP 2008153487; 28.11.2008 JP 2008305075; 28.11.2008 JP 2008305076
(43) Date of publication of application: 16.12.2009
(73) Proprietor: NISSIN KOGYO CO., LTD., Ueda-shi, Nagano (JP)
(72) Inventor: Mizutani, Kazuhiro c/o NISSIN KOGYO CO., LTD., Ueda-shi, Nagano (JP); Ueno, Osamu c/o NISSIN KOGYO CO., LTD., Ueda-shi, Nagano (JP)
(74) Representative: HOFFMANN EITLE

(56) References cited:
- EP-A- 1 493 642
- EP-A- 1 616 769
- DE-A1- 10 342 452
- DE-A1- 19 755 442

## Description

### BACKGROUND OF THE INVENTION

### Field of the Invention

The present invention relates to a vacuum pressure booster used for boost operation in a brake master cylinder for vehicles and, in particular, to a vacuum pressure booster improved for allowing an output rod to exert a high output power immediately at the time of emergency brake operation.

### Description of Related Art

Japanese Patent Unexamined Publication JP-A-2003-95085 discloses a vacuum pressure booster in which an air-introducing valve seat is opened widely at the time of emergency brake operation, thereby immediately introducing a large amount of air into an operating chamber for allowing an output rod to exert a high output power.

In the vacuum pressure booster of the JP-A-2003-95085, a valve cylinder having a first vacuum pressure valve seat at the rear end is continuously formed on a booster piston, a tubular member having a second vacuum pressure valve seat at the rear end and resiliently urged backward is accommodated inside the valve cylinder, a holder is substantially integrated with the valve cylinder, and an engagement portion which can be engaged with the holder is provided at the front end of the tubular member.
In this vacuum pressure booster, at the time of normal brake operation, the second vacuum pressure valve seat at the rear end of the tubular member in a state that the engagement portion is kept engaged with the holder is positioned forward more than the first vacuum pressure valve seat at the rear end of the valve cylinder. On the other hand, at the time of emergency brake operation, a force is applied from the input piston to the tubular member for disengaging the engagement portion from the holder, and the second vacuum pressure valve seat at the rear end of the tubular member disconnected from the holder is in contact with a valve body so as to space the valve body away from the first vacuum pressure valve seat, thus making it possible to increase the opening amount of the air valve.
However, at the time of emergency brake operation, this vacuum pressure booster of the JP-A-2003-95085 requires to impart on the tubular member a force for operating the tubular member so as to be disengage the tubular member from the holder, thus necessitating input loads which are more than necessary.

Document EP 1493642 A1 discloses a vaccum brake booster according to the preamble of claim 1.
Further, in order to open an air-introducing valve seat widely at the time of emergency brake operation to immediately introduce a large amount of air into an operating chamber so that an output rod can exert a high output power, Japanese Patent Unexamined Publication JP-A-2008-247376 proposes a vacuum pressure booster that a connecting piece fitted into a valve cylinder so as to slide in the radial direction thereof is engaged with a valve piston at the time of emergency brake operation, thereby keeping constant an axial relative position of the valve piston with respect to the valve cylinder.

In the vacuum pressure booster of the JP-A-2008-247376, the connecting piece slidingly contacts with the valve cylinder on its entire circumference to make a sliding area wider or to give a greater sliding resistance to the connecting piece. Thus, the connecting piece may not slide smoothly, and the resilient member which urges the connecting piece inwardly along the radial direction of the valve cylinder is required to be set greater in urging force.

### SUMMARY OF THE INVENTION

The present invention has been made in view of the above situation, an object is to provide a vacuum pressure booster capable of allowing output to arrive at a booster limiting point immediately, while reducing a required brake operating force at the time of emergency brake operation.

Further, the other object of the present invention is to provide a vacuum pressure booster capable of reducing the sliding resistance of connecting pieces so that the connecting pieces can be operated to slide smoothly.

In order to attain the above object, according to an aspect of the invention, there is provided a vacuum pressure booster, comprising:
a booster shell (11);
a booster piston (15) accommodated within the booster shell (11) and dividing an interior of the booster shell (11) into a front side and a rear side, the front side being a vacuum pressure chamber (17) connected to a vacuum pressure source (V) and the rear side being an operating chamber (18);
a valve cylinder (20A, 20B, 20C) which is continuously formed on the booster piston (15) and is slidably supported on a rear wall of the booster shell (11);
an input rod (26) adapted to move in an axial direction;
an input return spring (48) which urges the input rod (26) backward;
an input piston (25) connected with the input rod (26) so as to move interlockingly with the input rod (26);
a valve piston (34) fitted into the input piston (25) so as to slide forward from a predetermined backward position with respect to the input piston (25);
a set spring (38) which is disposed between the input piston (25) and the valve piston (34) and urges the valve piston (34) toward the backward position; and
a control valve (27) comprising:
   an air-introducing valve seat (39) which is formed at the valve piston (34) and communicates with an outside atmosphere; and
   a vacuum pressure introducing valve seat (40) which is formed at the valve cylinder (20A, 20B, 20C) and communicates with the vacuum pressure chamber (17);
   the control valve (27) switching a communication between the operating chamber (18) and the vacuum pressure chamber (17) to a communication between the outside atmosphere and the operating chamber (18) in accordance with axial movement of the input rod (26);
an output rod (77) slidably supported on a front wall of the booster shell (11); and
a reaction-force mechanism (73) which transmits to the output rod (77) a combined force of operation force inputted from the input rod (26) and thrust force of the booster piston (15) resulting from pressure difference between the operating chamber (18) and the vacuum pressure chamber (17), the reaction-force mechanism (73) being disposed among the valve cylinder (20A, 20B, 20C), the input piston (25) and the output rod (77),
wherein the input rod (26), the input return spring (48), the input piston (25), the valve piston (34), the set spring (38) and the control valve (27) are disposed within the valve cylinder (20A, 20B, 20C)
the vacuum pressure booster being characterized in that:
   wherein connecting pieces (65A, 65B, 91) are slidably fitted to a plurality of locations in a circumferential direction of the valve cylinder (20A, 20B, 20C) while freely moving in a radial direction of the valve cylinder (20A, 20B, 20C),
   wherein an engagement portion (67, 97) is provided at each of an inner end part of the connecting pieces (65A, 65B, 91),
   wherein a resilient member (66, 92), which urges each of the connecting pieces (65A, 65B, 91) toward the valve piston (34) in the radial direction, is disposed between the valve cylinder (20A, 20B, 20C) and each of the connecting pieces (65A, 65B, 91),
   wherein a latch portion (68) is provided on outer circumference of the valve piston (34),
   wherein a sliding face (69) is provided on the outer circumference at a front side of the latch portion (68),
   wherein at a time of an emergency brake operation, the input piston (25) and the valve piston (34) advance more than a predetermined stroke with respect to the valve cylinder (20A, 20B, 20C),
   wherein at the time of emergency brake operation, the engagement portions (67, 97) of the connecting pieces (65A, 65B, 91) engage with the latch portion (68) so as to connect the valve piston (34) with the valve cylinder (20A, 20B, 20C) while keeping constant an axial interval between the valve piston (34) and the valve cylinder (20A, 20B, 20C), and
   wherein at a time of not emergency brake operation, the engagement portions (67, 97) of the connecting pieces (65A, 65B, 91) slides along the sliding face (69) so that the valve piston (34) moves in the axial direction relative to the valve cylinder (20A, 20B, 20C).

According to the invention, at the time of emergency brake at which the input rod is advanced rapidly, the input piston and the valve piston advance more than a predetermined stroke with respect to valve cylinder, and the engagement portion provided at the radially inner portion of the connecting piece engages with the latch portion formed on the outer circumference of the valve piston. Here, the connecting piece is slidably fitted at a plurality of locations in the circumferential direction of the valve cylinder and urged radially inwardly of the valve cylinder by the resilient member.
Accordingly, the valve piston, the input piston and the valve cylinder are substantially integrated, and an air-introducing valve seat is kept open in accordance with the advance of the input piston. Therefore, even if the valve cylinder advances so as to follow the advance of the input piston, the valve piston advances together with the valve cylinder, and the air-introducing valve seat is kept fully open. As a result, a large amount of air is introduced into an operating chamber all at once, and the output of the booster piston is able to arrive instantly at a booster limiting point at which there is a maximum pressure difference between the vacuum pressure chamber and the operating chamber. Thus, the vacuum pressure booster of the invention can respond immediately to the emergency brake operation.
Further, since spring loads of a set spring disposed between the input piston and the valve piston urges the input piston in the advancing direction while the valve cylinder and the valve piston being connected each other through the connecting piece, the required brake operation force at the time of emergency brake operation can be reduced.
Still further, an advancing stroke amount of the input piston with respect to the valve cylinder required for engaging the engagement portion of the connecting piece with the latch portion of the valve piston can be changed by changing dimension of the connecting piece along the axial direction of the input piston. Thus, a brake assistance starting threshold valve at the time of emergency brake operation can be easily adjusted by changing the dimension of the connecting piece.

Further, according to an aspect of the invention, it is adaptable that
an inclined face (70, 98) is formed on the connecting piece (65A, 65B, 91) so as to face forward so that a diameter of an inner diameter portion thereof at a front side is larger than a diameter of the inner diameter portion thereof at a rear side,
a flange portion (25d) is monolithically formed with the input piston (25),
during a brake operation state, the flange portion (25d) is positioned a front side of the inclined faces (70, 98), and
when releasing the emergency brake operation, the flange portion (25d) contacts with the inclined face (70, 98) in accordance with backward motion of the input piston (25) so as to move the connecting pieces (65A, 65B, 91) to radially outwardly of the valve cylinder (20A, 20B, 20C) for disengaging the engagement portion (67) from the latch portion (68).

According to the invention, at the time of releasing the emergency brake operation, the flange portion provided on the input piston is in contact with the inclined face formed on each of the connecting pieces in response to the backward movement of the input piston with respect to a valve piston, and the flange portion moves the connecting piece radially outwardly of the valve cylinder as to disengage the engagement portion from the latch portion. Thus, the input piston moves backward relative to the valve cylinder and the input piston returns to a non-operation state, thus making it possible to release easily an emergency brake state.
Further, a backward stroke amount of the input piston until the release of the emergency brake operation can be changed by changing the dimension of the connecting piece along the axial direction of the input piston, and thus, a brake assistance release threshold value and hysteresis on return can be easily adjusted by changing the dimension of the connecting pieces.

Furthermore, according to an aspect of the invention, it is adaptable that
the resilient member (92)is a single and circular-arc shape member, and
the resilient member (92) is attached to an attachment groove (95) formed on an outer circumference of the valve cylinder (20C) while contacting with each of the connecting pieces (91).

According to the invention, the singular circular-arc resilient member is attached to the attachment groove formed on the outer circumference of the valve cylinder, thus making it possible to reduce the number of components.

Still further, according to an aspect of the invention, it is adaptable that
a pressure receiving face (71, 99) is provided on the connecting pieces (65A, 65B, 91), and
the pressure receiving face (71, 99) contacts with the resilient member (66, 92), receives resilient force from the resilient member (66, 92) and urges the connecting pieces (65A, 65B, 91) radially inwardly of the valve cylinder (20A, 20B, 20C) and axially forwardly or rearwardly.

According to the invention, connecting pieces are urged radially inwardly of the valve cylinder by a resilient force of resilient members and also urged forward or backward along the axial direction of the valve cylinder. Therefore, the connecting pieces are prevented from moving loosely in the axial direction of the valve cylinder, thus making it possible to secure a smooth operation of the connecting pieces and stabilize brake assistance characteristics.

According to an aspect of the invention, it is adaptable that
a rotation stopper (100) is provided on the valve cylinder (20C),
the rotation stopper (100) is in contact with both circumferential ends of the resilient member (92) to regulate a circumferential movement of the resilient member (92).

According to the invention, a rotation stopper which is in contact with both circumferential ends of the resilient member to regulate the circumferential movement of the resilient member is provided on the valve cylinder, the resilient member can be easily positioned in the circumferential direction to improve the assembly performance.

According to an aspect of the invention, it is adaptable that
a sliding projection (85, 86; 65d, 65e; 101, 102) is provided on either one of the valve cylinder and the connecting pieces (20B, 65B, 20C), and
the sliding projection (85, 86; 65d, 65e; 101, 102) contacts with the other of the valve cylinder and the connecting pieces (65A, 20A, 91) to guide a sliding operation of the connecting pieces (65A, 65B, 91).

According to the invention, the sliding projection provided on either one of the valve cylinder and the connecting pieces are in contact with the other of the valve cylinder and the connecting pieces, the connecting piece is guided for sliding operation. Therefore, the connecting piece is to slide on the valve cylinder in a smaller sliding area and the sliding resistance is reduced. Thus, the connecting pieces can be operated to slide smoothly.

According to an aspect of the invention, it is adaptable that
a hardness of the sliding projection (85, 86; 65d, 65e; 101, 102) is set lower than a hardness of the other of the valve cylinder and the connecting pieces (65A, 20A, 91).

According to the invention, the hardness of the sliding projection is lower than the hardness of a material which is slid by the sliding projections, wear resulting from the sliding of the connecting piece on the sliding projection is more likely to occur, thus making it possible to prevent the sliding projections from biting the material to be slid and secure a stable sliding operation of the connecting pieces.

### BRIEF DESCRIPTION OF THE DRAWINGS

Fig. 1 is a longitudinal sectional view of a vacuum pressure booster of a first embodiment;
Fig. 2 is an enlarged view showing the area indicated by the arrow II in Fig. 1 when the vacuum pressure booster is in a non-operation state and a cross sectional view taken along the line II-II in Fig. 3;
Fig. 3 is a cross sectional view taken along the line III-III in Fig. 2;
Fig. 4 is a cross sectional view taken along the line IV-IV in Fig. 2;
Fig. 5 is a cross sectional view taken along the line V-V in Fig. 2;
Fig. 6 is a cross sectional view taken along the line VI-VI in Fig. 2;
Fig. 7 is a perspective view showing a resilient member and a connecting piece;
Fig. 8 is a cross sectional view corresponding to Fig. 2 in a normal brake operation;
Fig. 9 is a diagram showing output characteristics of the vacuum pressure booster;
Fig. 10 is a cross sectional view corresponding to Fig. 2 in an emergency brake operation;
Fig. 11 is a cross sectional view corresponding to Fig. 2 in releasing of the emergency brake operation;
Fig. 12 shows a second embodiment and is a cross sectional view corresponding to Fig. 2, showing a vacuum pressure booster in the non-operation state;
Fig. 13 is a cross sectional view taken along the line XIII-XIII in Fig. 12;
Fig. 14 is a cross sectional view taken along the line XIV-XIV in Fig. 12;
Fig. 15 is a perspective view showing a connecting piece of a third embodiment;
Fig. 16 shows a fourth embodiment and is a cross sectional view corresponding to Fig. 2, showing a vacuum pressure booster in the non-operation state;
Fig. 17 is a cross sectional view taken along the line 17-17 in Fig. 16;
Fig. 18 is a cross sectional view taken along the line 18-18 in Fig. 16; and
Fig. 19 is a perspective view showing a relative arrangement of resilient member with respect to connecting piece.

### DETAILED DESCRIPTION OF EXEMPLARY EMBODIMENTS OF THE PRESENT INVENTION

Hereinafter, a description will be given to exemplary embodiments of the present invention by referring to embodiments of the present invention illustrated in the attached drawings.

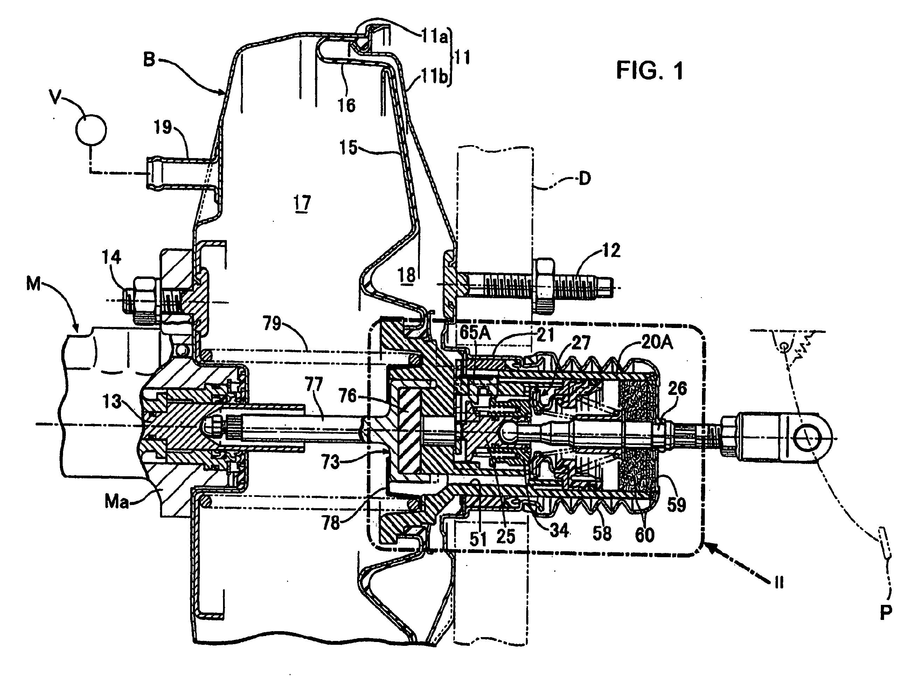

Fig. 1 through Fig. 11 are drawings showing a first embodiment of the present invention.

First, with reference to Fig. 1, in a booster shell 11 of a vacuum pressure booster B, an opposing end of a front shell half body 11a and that of a rear shell half body 11b are connected each other. The rear shell half body 11b is fixed to the front wall D of a vehicle interior by a bolt 12, and a cylinder body Ma of a brake master cylinder M operated by the booster B is fixed to the front shell half body 11a by a bolt 14.

An interior of the booster shell 11 is formed annularly by a steel plate, and divided into a vacuum pressure chamber 17 on the front side and a operating chamber 18 on the rear side by a booster piston 15 and a diaphragm 16. The booster piston 15 is accommodated into the booster shell 11 so as to reciprocate back and forth. The diaphragm 16 is superimposed and fastened to the rear face of the booster piston 15, and an outer circumferential edge of the diaphragm 16 is held between these both shell half bodies 11a, 11b. The vacuum pressure chamber 17 is connected via a vacuum pressure introducing tube 19 to a vacuum pressure source V (for example, the interior of an intake manifold of an internal combustion engine). A valve cylinder 20A made of synthetic resin is connected integrally to a central part of the booster piston 15 and that of the diaphragm 16.

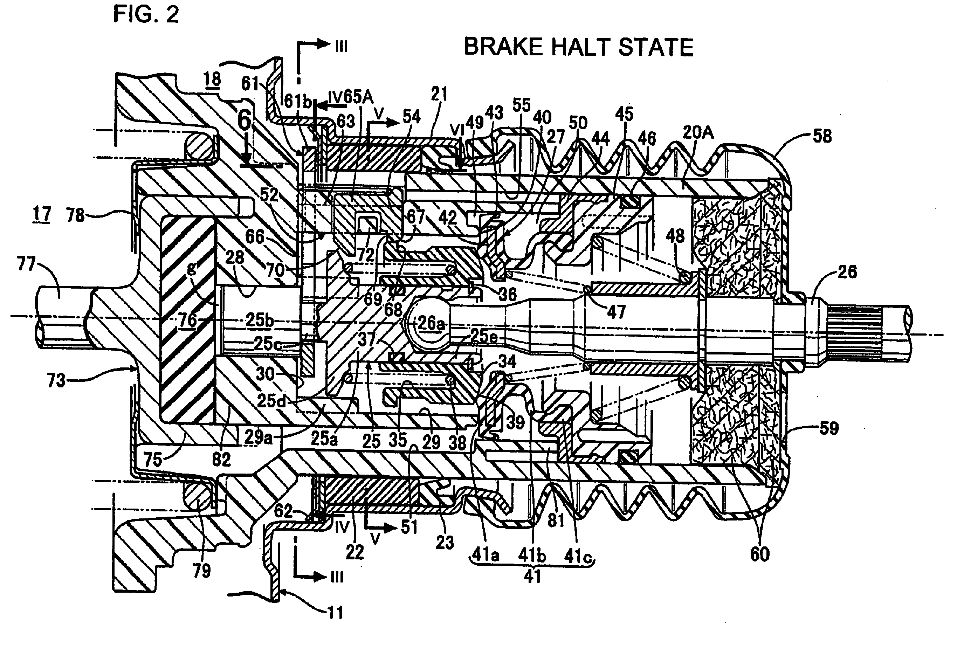

With reference to Fig. 2, the valve cylinder 20A is slidably supported on a guide tubular portion 21 provided on a central part of the rear shell half body 11b so as to extend rearwardly though a bearing member 22 and a seal member 23.

Within the valve cylinder 20A, an input piston 25, an input rod 26 connected to the input piston 25 and a control valve 27 are provided. The control valve 27 switches a communication between the operation chamber 18 and the vacuum chamber 17 to a communication between the operation chamber and an outside atmosphere in accordance with the axial movement of the input rod 26.

At the central part of the valve cylinder 20A, disposed coaxially are a cylinder hole 28 whose front end is opened forward and an accommodation hole 29 continuing coaxially to the rear end of the cylinder hole 28 sequentially from the front. The accommodation hole 29 is set to be larger in diameter than the cylinder hole 28, and an annular step 30 facing backward is provided between the rear end of the cylinder hole 28 and the front end of the accommodation hole 29.

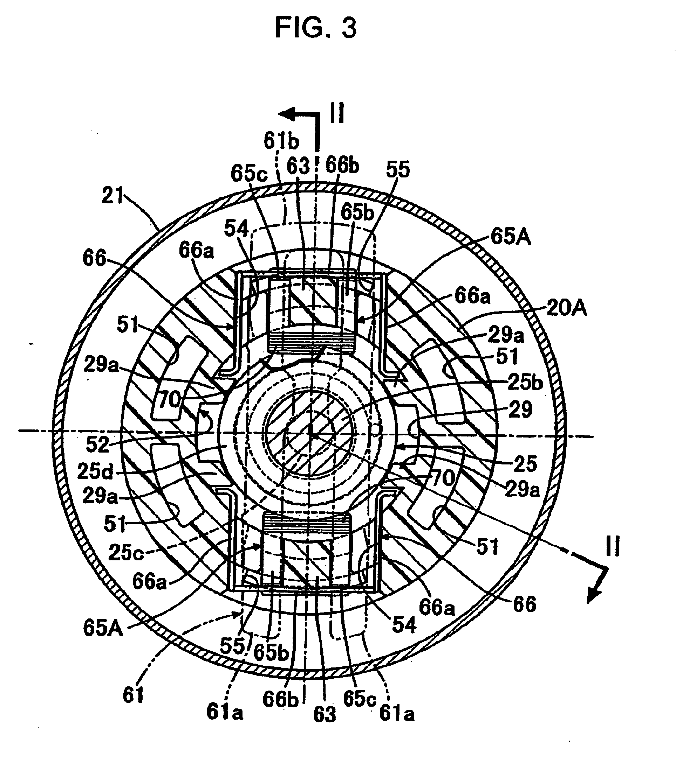

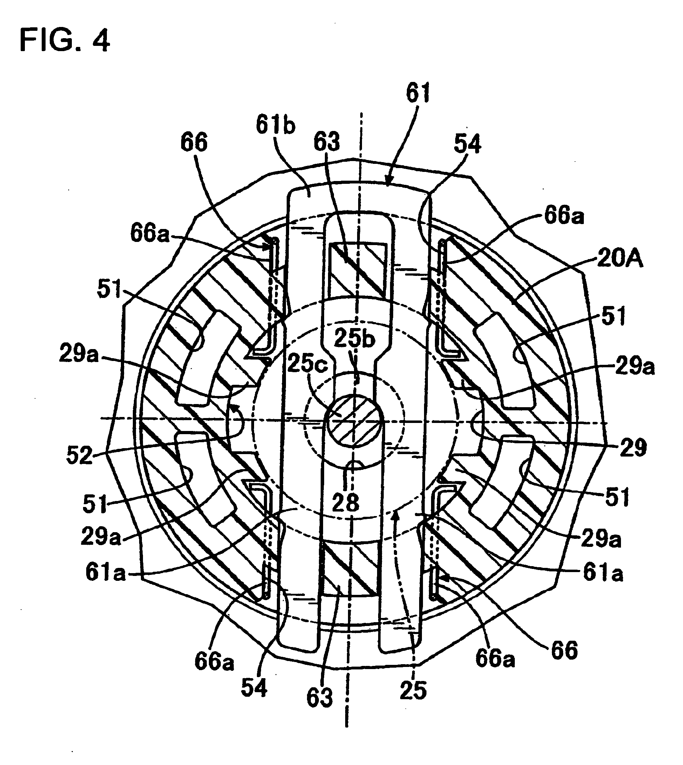

The input piston 25 is provided integrally with a piston rear portion 25a, a piston front portion 25b smaller in diameter than the piston rear portion 25a, and a neck portion 25c formed smaller in diameter than the piston front portion 25b to connect between the piston rear portion 25a and the piston front portion 25b. A flange portion 25d projecting outward in the radial direction is provided continuously in an integrated manner at the front end of the piston rear portion 25a. Then, the piston front portion 25b is slidably fitted into the cylinder hole 28 of the valve cylinder 20A, and the piston rear portion 25a and the flange portion 25d are coaxially accommodated into the accommodation hole 29 of the valve cylinder 20A. Further, a plurality of, for example, four guide projections 29a opposing an outer circumference of the flange portion 25d are provided so as to project radially inwardly at the front end part of the accommodation hole 29, as shown in Fig. 3 and Fig. 4.

Further, a connecting tubular portion 25e is formed coaxially in an integrated manner at the rear end of the piston rear portion 25a. A spherical front end portion 26a of the input rod 26 is fitted into the connecting tubular portion 25e and the connecting tubular portion 25e is partially crimped for preventing the removal of the spherical front end portion 26a. Thereby, the input rod 26 is swingably connected to the input piston 25, and a brake pedal P (refer to Fig. 1) for operating the input rod 26 forward is connected to the rear end of the input rod 26.

A cylindrical valve piston 34 is fitted into an outer circumference of the piston rear portion 25a at the input piston 25 so as to slide between a backward position and a forward position. The backward position of the valve piston 34 is, as shown in Fig. 2, defined by a rear end face of the valve piston 34 which is received by a stopper ring 36 caught on an outer circumference of the rear end portion of the connecting tubular portion 25e. Further, the forward position of the valve piston 34 is defined by the front end of the valve piston 34 which is in contact with the flange portion 25d of the input piston 25. Still further, an annular seal member 37 slidably in contact with an inner circumference of the valve piston 34 is attached on an outer circumferential face of the piston rear portion 25a.

An annular recess 35 whose front end is opened is coaxially provided on the valve piston 34. A set spring 38 partially accommodated into the recess 35 is provided in a compressed state between the flange portion 25d of the input piston 25 and the valve piston 34 so as to urge the valve piston 34 toward the backward position.

An air-introducing valve seat 39 is formed at the rear end of the valve piston 34, and an annular vacuum pressure introducing valve seat 40 arranged concentrically so as to surround the air-introducing valve seat 39 is formed at the valve cylinder 20A.

Further, a single valve body 41, which cooperates together with the air-introducing valve seat 39 and the vacuum pressure introducing valve seat 40 to function as a valve, is attached to the valve cylinder 20A. The valve body 41 in its entirety is formed with an elastic material such as rubber. The valve body 41 has a valve portion 41a arranged in opposition so as to be seated on the air-introducing valve seat 39 and on the vacuum pressure introducing valve seat 40; an expansion tubular portion 41b continuing to an inner circumference of the valve portion 41a to extend backward; and an annular attachment bead portion 41c continuing to the rear end of the expansion tubular portion 41b. An annular reinforcing plate 42 inserted into the valve portion 41a from the inner circumference side thereof is bonded to the valve portion 41a by molding. Still further, an annular seal lip 43 bent backward is formed integrally on an outer circumference of the valve portion 41a.

The attachment bead portion 41c is held hermetically between front and rear valve holders 44, 45 in contact with the rear end of an annular raised portion 81 formed integrally on an inner circumference side of the valve cylinder 20A together with a vacuum pressure introducing valve seat 40. A seal member 46 such as an O-ring closely in contact with an inner circumferential face of the valve cylinder 20A is attached to the rear valve holder 45.

A valve spring 47 for urging a valve portion 41a in such a direction that seats the valve portion 41a on an air-introducing valve seat 39 and a vacuum pressure introducing valve seat 40 is provided in a compressed state between the reinforcing plate 42 bonded to the valve portion 41a by molding and an input rod 26.

Thus, the control valve 27 has the vacuum pressure introducing valve seat 40, the air-introducing valve seat 39, the valve body 41 and the valve spring 47 as described above.

An input return spring 48 is provided in a compressed state between the rear valve holder 45 and the input rod 26, thereby the front and rear valve holders 44, 45 are held in contact with the rear end of the annular raised portion 81 on the valve cylinder 20A, and the input rod 26 is urged in the backward direction.

A front annular chamber 49 which surrounds the vacuum pressure introducing valve seat 40 is formed at the annular raised portion 81 on an inner circumference of the valve cylinder 20A. The front face of the valve portion 41a faces to the front annular chamber 49. An inner circumferential face of the front annular chamber 49 which is outside in the radial direction extends backward more than the vacuum pressure introducing valve seat 40, and the seal lip 43 on the outer circumference of the valve portion 41a is closely in contact with the inner circumferential face thereof so as to slide. Therefore, the front annular chamber 49 is closed when the valve portion 41a is seated on the vacuum pressure introducing valve seat 40. Further, a rear annular chamber 50, which is separated from the front annular chamber 49 by the valve portion 41a having the seal lip 43, is formed inside the annular raised portion 81 so as to face to the back face of the valve portion 41a.

The valve cylinder 20A is provided with a plurality of first ports 51, one end of which leads to the vacuum pressure chamber 17 and the other end of which is opened at the front annular chamber 49; and a second port 52, one end of which leads to the operating chamber 18 and the other end of which is opened between the vacuum pressure introducing valve seat 40 and the air-introducing valve seat 39.

In Fig. 3, Fig. 4 and Fig. 5, the second port 52 has an accommodation hole 29 formed on the valve cylinder 20A and a pair of radially communicating holes 54, provided so as to oppose to each other across a center line of the cylinder of the valve cylinder. The accommodation hole 29 larger in diameter than the cylinder hole 28, coaxially provided next to the rear end of the cylinder hole 28, and accommodates the piston rear portion 25a of the input piston 25 and the valve piston 34. One end of the pair of radially communicating holes 54 leads to the operating chamber 18 and the other end thereof leads to the front end of the accommodation hole 29. Further, the radially communicating hole 54 of the second port 52 extends in a direction in parallel with the axial line of the valve cylinder 20A, and communicates with the rear annular chamber 50 through an axially communicating hole 55 provided on the valve cylinder 20A.

Both ends of an expandable boot 58 for covering the valve cylinder 20A are attached to the rear end of the guide tubular portion 21 on the rear shell half body 11b in the booster shell 11 and to the input rod 26. An air-introducing port 59 communicatively connected to the inside of the valve body 41 is provided at the rear end part of the boot 58. A filter 60 for filtering air flowing into the air-introducing port 59 is interposed between an outer circumferential face of the input rod 26 and an inner circumferential face of the valve cylinder 20A. The filter 60 is made flexible so as not to block the relative movement of the input rod 26 with the valve cylinder 20A.

The valve cylinder 20A is provided with a key 61 for defining a backward limit of the booster piston 15 and that of the input piston 25. The key 61 is formed approximately in a U-letter shape and has integrally a pair of regulation portions 61a, 61a and a connection portion 61b. The regulation portions 61a, 61a are inserted into radially communicating holes 54, 54 of the valve cylinder 20A so as to hold the neck portion 25c of the input piston 25 between both sides thereof, and the connection portion 61b connects one end of the regulation portions 61a at the one end thereof. And, the connection portion 61b is arranged so as to oppose to the front face of a stopper wall 62 provided at the guide tubular portion 21 of the rear shell half body 11b.
Then, the key 61 is in contact with the stopper wall 62, by which the booster piston 15 and the valve cylinder 20A are defined for the backward limits. Also, the front end face of the neck portion 25c on the input piston 25 is in contact with the key 61, by which the input piston 25 and the input rod 26 are defined for the backward limits. The axial length of the neck portion 25c is set to be longer than the thickness of the key 61, thereby the input piston 25 and the key 61 are able to make a slight relative movement.

The front end face of the radially communicating hole 54 along the axial direction of the valve cylinder 20A continues so as to be flush with a step 30 between the cylinder hole 28 and the accommodation hole 29. Projections 63 which project backward from the front end face of the radially communicating hole 54 are projectingly provided integrally on the valve cylinder 20A so as to be positioned at the central part of the radially communicating holes 54 along the circumferential direction of the valve cylinder 20A. The key 61 is inserted into the radially communicating holes 54 so as to hold the projections 63 between a pair of the regulation portions 61a, 61a.

Connecting pieces 65A, 65A allowed to move along the radial direction of the valve cylinder 20A are slidably fitted at a plurality of locations in the circumferential direction of the valve cylinder 20A. In this embodiment, the connecting pieces 65A are slidably fitted into the radially communicating holes 54 provided at two locations spaced evenly in the circumferential direction of the valve cylinder 20A.

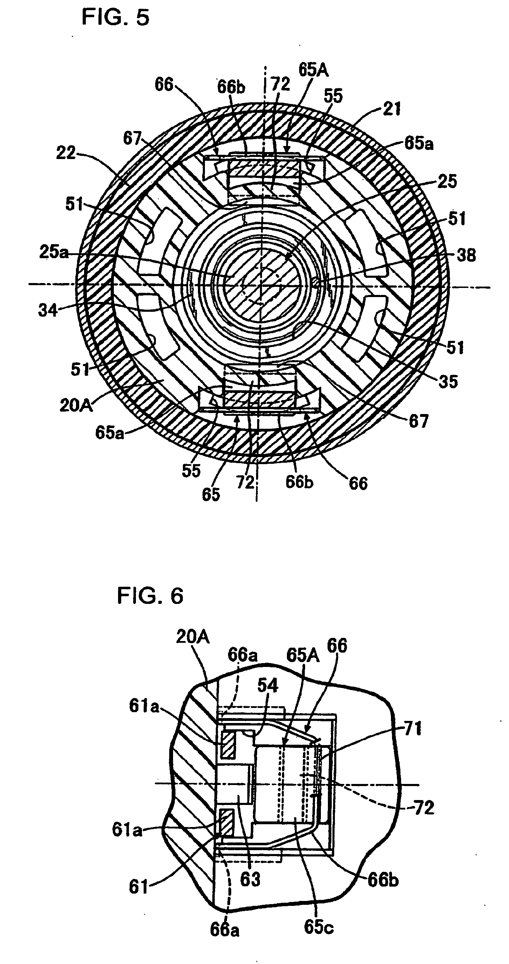

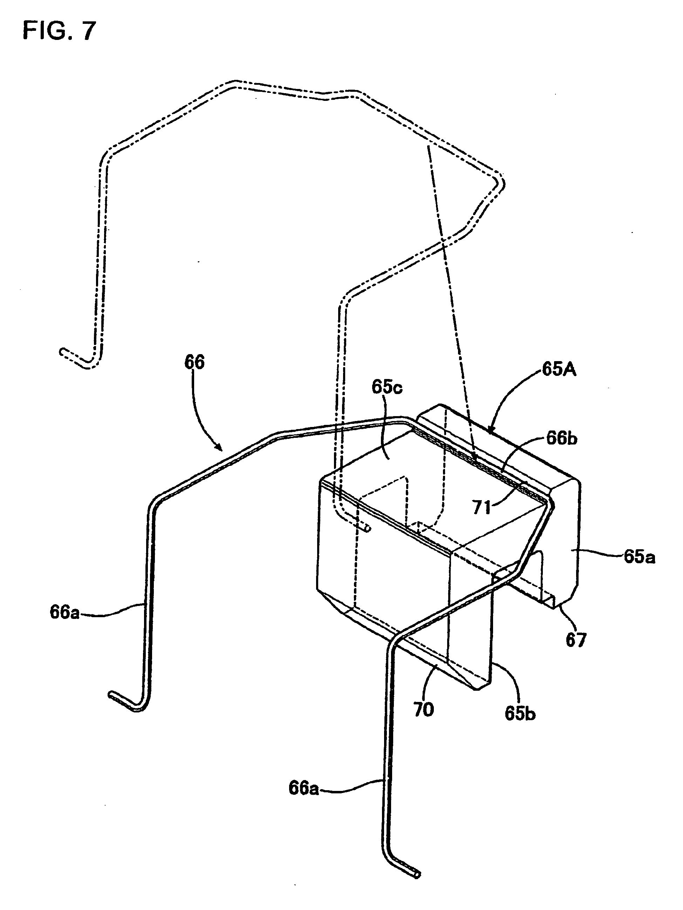

With reference to both Fig. 6 and Fig. 7, a connecting piece 65A is formed approximately in a U-letter shape which is opened inwardly in the radial direction of the valve cylinder 20A. the connecting piece 65A has integrally a rear arm portion 65a and a front arm portion 65b arranged so as to be spaced along the axial direction of the valve cylinder 20A; and a connection portion 65c which connects the outer end of the rear arm portion 65a with that of the front arm portion 65b along the radial direction of the valve cylinder 20A.

The connecting piece 65A is slidably fitted into the radially communicating hole 54 while opposing the rear arm portion 65a to the rear end face of the radially communicating hole 54 along the axial direction of the valve cylinder 20A and opposing the front arm portion 65b to the projections 63. The faces on both faces of the connecting piece 65A along the circumferential direction of the valve cylinder 20A are slidingly in contact with the inner face of the radially communicating hole 54. More specifically, the connecting piece 65A is prohibited to move relative to the valve cylinder 20A in the circumferential direction but is able to move in the axial direction relative to the valve cylinder 20A, and slidably fitted into the radially communicating hole 54.

Resilient members 66 resiliently urge each of the connecting pieces 65A toward the valve piston 34 on the internal side along the radial direction of the valve cylinder 20A. The resilient members 66 are provided between the connecting pieces 65A and the valve cylinder 20A. The resilient members 66 contact a step 30 of the valve cylinder 20A; a pair of supporting portions 66a, 66a arranged on both sides of these resilient members in parallel with a pair of regulation portions 61a, 61a in the key 61 and in contact with the step 30 of the valve cylinder 20A; and a pressing portion 66b connected to the outer end of these both supporting portions 66a along the radial direction of the valve cylinder 20A. The inner ends of these both supporting portions 66a are engaged with the inner circumference of the accommodation hole 29. The pressing portion 66b is formed approximately in a U-letter shape opened toward the front, extending backward from the outer ends of these both supporting portions 66a.

The rear parts of the pressing portions 66b on the resilient members 66 are in contact with connection portions 65c of the connecting pieces 65A, by which the connecting pieces 65A are resiliently urged toward the valve piston 34. Engagement portions 67 are provided at inner end parts of the rear arm portions 65a on the connecting pieces 65A. On the other hand, an annular latch portion 68 which can be engaged with the engagement portions 67 from backward and an annular sliding face 69 arranged forward more than the latch portion 68 so that the engagement portions 67 are allowed to be in sliding contact are provided on an outer circumference of the valve piston 34.

Then, the latch portion 68 is provided on an outer circumference of the valve piston 34 so that an axial relative position of the valve piston 34 with respect to the valve cylinder 20A is kept constant by engaging the latch portion 68 with the engagement portions 67 of the connecting pieces 65A at the time of emergency brake operation. Here, at the time of the emergency brake operation, the input piston 25 and the valve piston 34 advance more than a predetermined stroke with respect to the valve cylinder 20A. The latch portion 68 is coupled to the valve cylinder 20A in such a manner that the valve piston 34 is substantially fixed to the valve cylinder 20A in a state that the engagement portions 67 are engaged with the latch portion 68. Further, the sliding face 69 is formed on an outer circumference of the valve piston 34 so that that the engagement portions 67 are allowed to sliding contact at the time of non-emergency brake operation.

Inclined faces 70 which are inclined to be positioned outwardly along the radial direction of the valve cylinder 20A toward forward are formed at the inner end parts of front arm portions 65b on the connecting piece 65A so as to face forward. In other words, the inclined face 70 is inclined so that a diameter of an inner diameter portion thereof at a front side is larger than a diameter of the inner diameter portion thereof at a rear side. On the other hand, the flange portion 25d provided at the input piston 25 is positioned at a front side of the inclined face 70 in a state that a brake is in operation while in contact with the inclined faces 70 in response to backward motions of the input piston 25 with respect to the valve piston 34 on release of an emergency brake operation, by which the connecting pieces 65A are allowed to move outwardly in the radial direction of the valve cylinder 20A so that the engagement portions 67 are disengaged from the latch portions 68.

Further, a pressure receiving face 71 is provided on the connecting piece 65A. The pressure receiving face 71 contacts with the resilient member 66 and receives a resilient force therefrom so that the connecting pieces 65A are urged radially inwardly and axially forward or rearward of the valve cylinder 20A.
In this embodiment, the rear parts of the pressing portions 66b on the resilient members 66 are in contact with the rear parts of the connection portions 65c on the connecting pieces 65A. Further, the pressure receiving faces 71 is provided on the connection portion 65c so as to be inclined so that an inner portion thereof is spaced away from the axial line of the valve cylinder 20A toward backward. Thus, the rear parts of pressing portions 66b on the resilient members 66 contact with the pressure receiving faces 71 and the connecting pieces 65A are urged inwardly in the radial direction of the valve cylinder 20A and forward in the axial direction.

As described above, the connecting pieces 65A are urged radially inwardly of the valve cylinder 20A by a resilient force of the resilient members 66 and also urged backward along the axial direction of the valve cylinder 20A, thus making it possible to prevent the connecting pieces 65A from moving loosely in the axial direction of the valve cylinder 20A. As a result, it is possible to secure a smooth operation of the connecting pieces 65A and stabilize the brake assistance characteristics.

Further, regulation portions 72 are arranged on the valve cylinder 20A. The regulation portion 72 is arranged between the rear arm portion 65a and the front arm portion 65b so as to oppose to the connecting portions 65c of the connecting pieces 65A from radially inwardly of the valve cylinder 20A. The regulation portion 72 further integrates and connects side walls on both sides of the radially communicating holes 54. The regulation portion 72 acts to prevent, at the time of assembling, the connecting pieces 65A urged by the resilient members 66 from entering into the accommodation hole 29.

Again in Fig. 2, an annular portion 82 for surrounding the cylinder hole 28 is formed on the front end face of the valve cylinder 20A, and a cup-shaped output piston 75 is slidably fitted into an outer circumference of the annular portion 82. A flat elastic reaction-force piston 76 is interposed between axially opposing faces to the output piston 75 and the annular portion 82 and to the piston front portion 25b of the input piston 25.

In this instance, the elastic reaction-force piston 76 is closely in contact with the front end face of the annular portion 82. Further, a fixed gap "g" is to develop between the piston front portion 25b of the input piston 25 and the elastic reaction-force piston 76 when the vacuum pressure booster B is in non-operation.

An output rod 77 is provided in a projecting manner on the front face of the output piston 75, and the output rod 77 is connected to the piston 13 of the brake master cylinder M.

Then, the annular portion 82 of the valve cylinder 20A, the input piston 25, the elastic reaction-force piston 76 and the output piston 75 constitute a reaction-force mechanism 73 which transmits to the output rod 77 a combined force of input operated by the input rod 26 with a thrust force of the booster piston 15 resulting from a difference in pressure between the operating chamber 18 and the vacuum pressure chamber 17.

A retainer 78 is disposed on the output piston 75 and the front end face of the valve cylinder 20A so as to be in contact, and a booster return spring 79 for urging the booster piston 15 and valve cylinder 20A in the backward direction is provided in a compressed state between the retainer 78 and the front wall of the booster shell 11.

Next, a description will be given for actions of the first embodiment. As shown in Fig. 1 and Fig. 2, where the vacuum pressure booster B is in a halt state, a key 61 attached to the valve cylinder 20A is in contact with the front face of the stopper wall 62 in the rear shell half body 11b, and the front end face of the neck portion 25c on the input piston 25 is in contact with the key 61, and the booster piston 15 and the input rod 26 are positioned at the respective backward limits. At this time, by an urging force of the set spring 38, the position of the valve piston 34 is kept at the backward position at which the valve piston 34 contacts with the stopper ring 36 provided on the input piston 25, and the air-introducing valve seat 39 at the rear end of the valve piston 34 is seated at a valve portion 41a of the valve body 41, thus pressing the valve portion 41a so as to be slightly unseated from the vacuum pressure introducing valve seat 40. Thereby, the communication between the air-introducing port 59 and the second port 52 is blocked and the communication between the first and the second ports 51, 52 is established. Therefore, a vacuum pressure in the vacuum pressure chamber 17 is transmitted through both ports 51, 52 to the operating chamber 18. Since both chambers 17, 18 are equal in pressure, the booster piston 15 and the position of the valve cylinder 20A are kept at the backward position by the urging force of the booster return spring 79.

### [Normal brake]

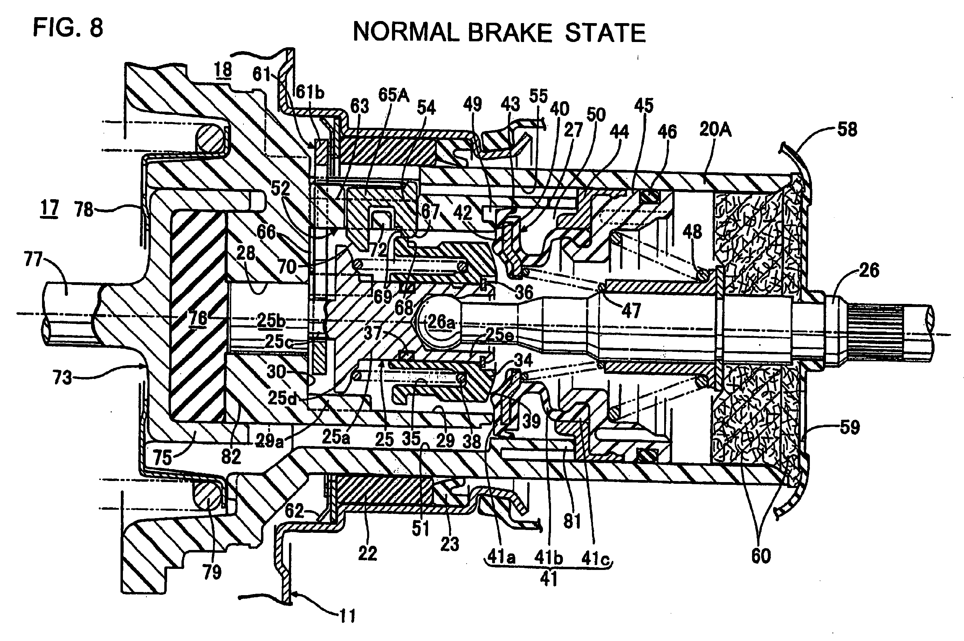

When a brake pedal P is pressed at ordinary speed and an input rod 26 and an input piston 25 advance, the input piston 25 advances together with a valve piston 34 which is kept at the backward position as shown in Fig. 8. Therefore, a valve body 41 instantly extends an expansion tubular portion 41b, seating a valve portion 41a on a vacuum pressure introducing valve seat 40 by an urging force of a valve spring 47. At the same time, an air-introducing valve seat 39 is separated from the valve body 41, thereby blocking the communicative connection between first and second ports 51, 52 and also the second port 52 communicates with an air-introducing port 59 through the inner side of the valve body 41.

As a result, air introduced from the air-introducing port 59 into the valve cylinder 20A passes through the air-introducing valve seat 39 and is further introduced via the second port 52 to an operating chamber 18, thus, the operating chamber 18 is made higher in pressure than the vacuum pressure chamber 17.
Accordingly, due to the forward thrust force owing to these pressure difference, the booster piston 15 advances against a force of a booster return spring 79, together with the valve cylinder 20A, the elastic reaction-force piston 76, the output piston 75 and the output rod 77, and a piston 13 of the brake master cylinder M is pressed forward by the output rod 77. As described above, the air-introducing valve seat 39 advances simultaneously with the advancement of the input rod 26, and is unseated from the valve portion 41a, thus making it possible to increase responsiveness of the booster piston 15.

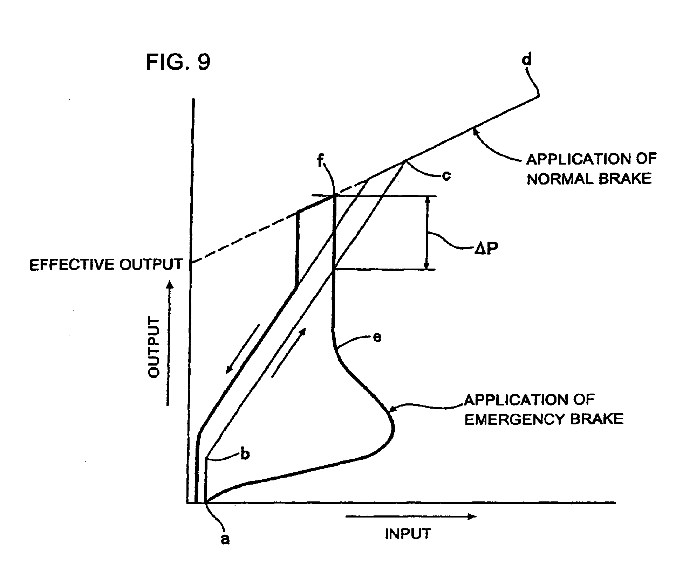

At an early stage of advancement of the input rod 26, until a piston front portion 25b of the input piston 25 narrows a gap "g" to be in contact with the elastic reaction-force piston 76, the input rod 26 is free of a reaction force from the reaction-force mechanism 73 even when the air-introducing valve seat 39 is opened. Thus, the output of the output rod 77 exhibits jumping characteristics that rise rapidly as shown in the line a-b in Fig. 9.

Further, at the time of operation for advancing the input rod 26, a vacuum pressure transmitted from a first port 51 to the front annular chamber 49 acts on a front face of the valve portion 41a facing the front annular chamber 49 of the valve cylinder 20A; on the other hand, an atmospheric pressure transmitted from a second port 52 via an axially communicating hole 55 to the rear annular chamber 50 acts on a back face of the valve portion 41a facing the rear annular chamber 50 of the valve cylinder 20A. Thus, in addition to the set load of the valve spring 47, the pressure difference between the front and the rear annular chambers 49, 50 acts on the valve portion 41a and the valve portion 41a is toward the vacuum pressure introducing valve seat 40 so as to be seated thereon.
Therefore, the set load of the valve spring 47 can be decreased by the urging force resulting from the difference in atmospheric pressure. Accordingly, the set loads of the input return spring 48 for urging the input rod 26 in the backward direction can be decreased, too. As a result, a relatively small initial-operation input can be used to obtain jumping characteristics, by which an ineffective stroke of the brake master cylinder M and that of each wheel brake can be shortened to improve the responsiveness of each wheel brake.

Further, in the above state, a seal lip 43 on an outer circumference of the valve portion 41a is bent backward and closely in contact with an inner circumferential face of the valve cylinder 20A. Thereby, the seal lip 43 can be attached to the inner circumferential face more strongly due to the pressure difference between the front and the rear annular chamber 49, 50, thus making it possible to secure a hermetic state between both annular chambers 49, 50.

After the piston front portion 25b of the input piston 25 is in contact with a elastic reaction-force piston 76, an operating reaction force of the output rod 77 is partially fed back via the elastic reaction-force piston 76 to the input rod 26. Thus, an operator is able to perceive the magnitude of output from the output rod 77.

The input rod 26 is halted from advancement when a desired output is obtained, by which the advancement of the booster piston 15 is halted again by seating the valve portion 41a of the valve body 41 on the air-introducing valve seat 39 to block any additional air from being introduced into the vacuum pressure chamber 3. Therefore, the valve cylinder 20A and the booster piston 15 are to advance following the advancement of the input rod 26.

Moreover, at the time of normal brake operation at which the input rod 26 advances at relatively slow speeds, there are relatively few cases of delay in following of the booster piston 15 and the valve cylinder 20A with respect to the input rod 26. Thus, a relative displacement between the input rod 26 and the valve cylinder 20A is small and a relative displacement between a valve piston 34 advancing with the input piston 25 connected to the input rod 26 and the connecting pieces 65A slidably fitted to the valve cylinder 20A is also small. Therefore, the engagement portions 67 of the connecting pieces 65A are only in contact in a sliding manner with the sliding face 69 of the valve piston 34 but not engaged with the latch portion 68.

Then, the output of the output rod 77 is increased as shown in line b-c in Fig. 9 according to a booster ratio determined by a ratio of pressure receiving area of the annular portion 82 of the valve cylinder 20A in contact with the elastic reaction-force piston 76 to that of the piston front portion 25a at the input piston 25.

After reaching a booster limiting point c at which there is a maximum pressure difference between the vacuum pressure chamber 17 and the operating chamber 18, the output of the output rod 77 is, as shown in the line c-d, is obtained by a sum of a maximum thrust force of the booster piston 15 resulting from the pressure difference and input operated by the input rod 26.

### [Emergency brake]

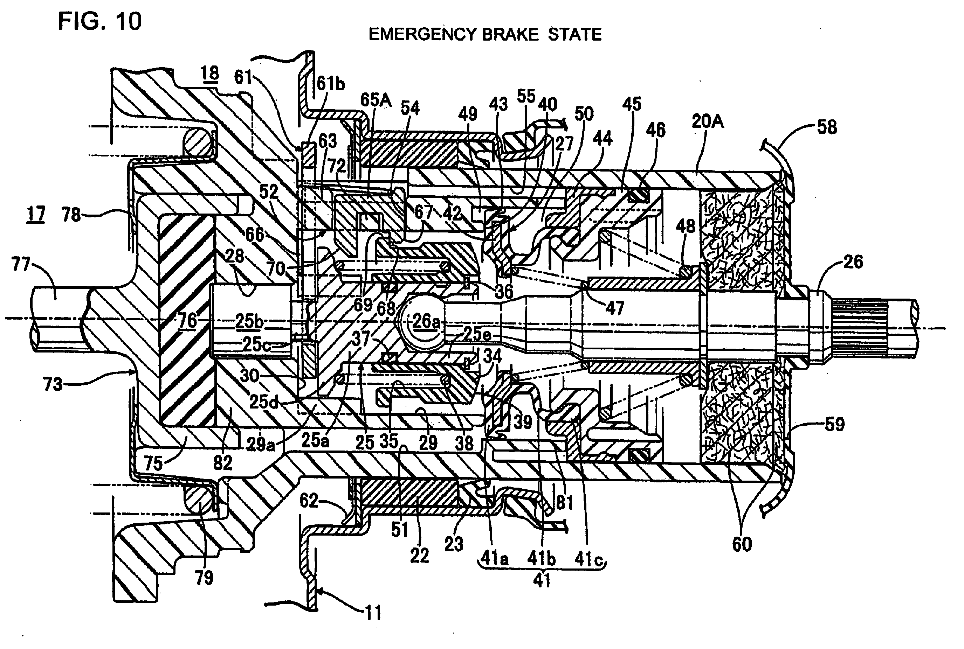

At the time of an emergency brake operation at which the brake pedal P is pressed rapidly, the elastic reaction-force piston 76 is compressed by the piston front portion 25b of the input piston 25, thereby advancing the input piston 25 and the valve piston 34 to a great extent before the booster piston 15 and the valve cylinder 20A start to advance because the input piston 25 advances at high speeds. Then, as shown in Fig. 10, engagement portions 67 of the connecting pieces 65A are engaged with the latch portion 68 of the valve piston 34, and the valve piston 34 is against an urging force of the set spring 38 and kept connected to the connecting pieces 65A slidably fitted to the valve cylinder 20A. Therefore, the valve piston 34, the input piston 25 and the valve cylinder 20A are substantially integrated and kept in such a fully opened state that the air-introducing valve seat 39 is spaced away from the valve portion 41a of the valve body 41 to the greatest extent.

Then, at the time of emergency brake operation, in a state that the air-introducing valve seat 39 is fully opened, the valve piston 34 is connected to the connecting pieces 65A and the valve cylinder 20A at a connecting point "e" shown in Fig. 9. After the connection, even when the booster piston 15 and the valve cylinder 20A slightly advance so as to follow the advancement of the input rod 26, the valve piston 34 is to advance in an integrated manner with the valve cylinder 20A. Thus, the air-introducing valve seat 39 is kept fully opened. As a result, a large amount of air is introduced into the vacuum pressure chamber 17 all at once, and as shown by line e-f in Fig. 9, there is instantly arrived at a booster limiting point "f" at which there is a maximum pressure difference between the vacuum pressure chamber 17 and the operating chamber 18. Thus, it is possible to attain an increase in output only by ΔP as compared with a normal brake operation. Further, a piston 13 of the master cylinder M can be kept pressed strongly to cope with the emergency brake operation immediately.

Even in this emergency brake operation, the air-introducing valve seat 39 simultaneously advances with the input rod 26 and can be unseated from the valve portion 41a. It is, thus, possible to increase the responsiveness of the booster piston 15.

Further, in a state that the valve piston 34 is connected to the valve cylinder 20A via connecting pieces 65A, spring load of the set spring 38 provided between the input piston 25 and the valve piston 34 act on the input piston 25 in a forward direction. Thus, it is possible to reduce a brake operating force at the time of emergency brake operation.

Still further, an advancing stroke amount of the input piston 25 in the forward direction with respect to the valve cylinder 20A, which is necessary for engagement of engagement portions 67 of the connecting pieces 65A with the latch portion 68 of the valve piston 34, can be changed by a change in dimensions of the connecting pieces 65A along the axial direction of the input piston 25. Therefore, a brake assistance starting threshold value at the time of emergency brake operation can be easily adjusted by changing dimensions of the connecting pieces 65A.

### [Release from emergency brake operation]

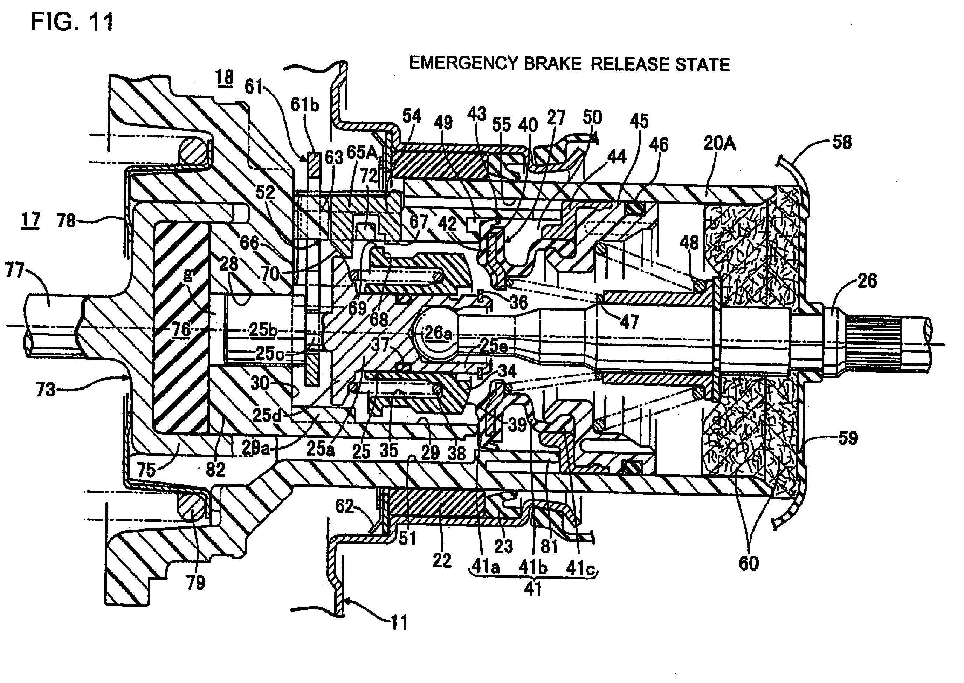

When releasing a force applied to the brake pedal P in order to release the emergency brake operation, the input rod 26 and the input piston 25 first move backward due to a force of the input return spring 48. When the input piston 25 starts to move backward, as shown in Fig. 11, the flange portion 25d of the input piston 25 is in contact with inclined faces 70 of the connecting pieces 65A, thereby expanding the connecting piece 65A so as to disengage the connecting pieces 65A from the latch portion 68 and the connecting pieces 65A is disengaged from the valve piston 34. Thereafter, the valve piston 34 immediately returns to a backward position at which the valve piston 34 contacts with the stopper ring 38 of the input piston 25 by the urging force of the set spring 38, thus, the air-introducing valve seat 39 on the valve portion 41a of the valve body 41 is seated and also the valve portion 41a is urged backward so as to be unseated from the vacuum pressure introducing valve seat 40. Therefore, the operating chamber 18 communicates with the vacuum pressure chamber 17 via a second port 52 and a first port 51, thereby blocking the introduction of air into the operating chamber 18. Air in the operating chamber 18 is also sucked through the vacuum pressure chamber 17 into a vacuum pressure source V, thereby eliminating a difference in atmospheric pressure between them. As a result, the booster piston 15 moves backward due to a resilient force of the booster return spring 79, thus releasing the operation of the master cylinder M.

Further, the stroke amount of the input piston 25 in the backward direction until release of the emergency brake operation can be changed by changing dimensions of the connecting pieces 65A along the axial direction of the input piston 25. Thus, a brake assistance release threshold valve and hysteresis on return can be easily adjusted by changing dimensions of the connecting pieces.

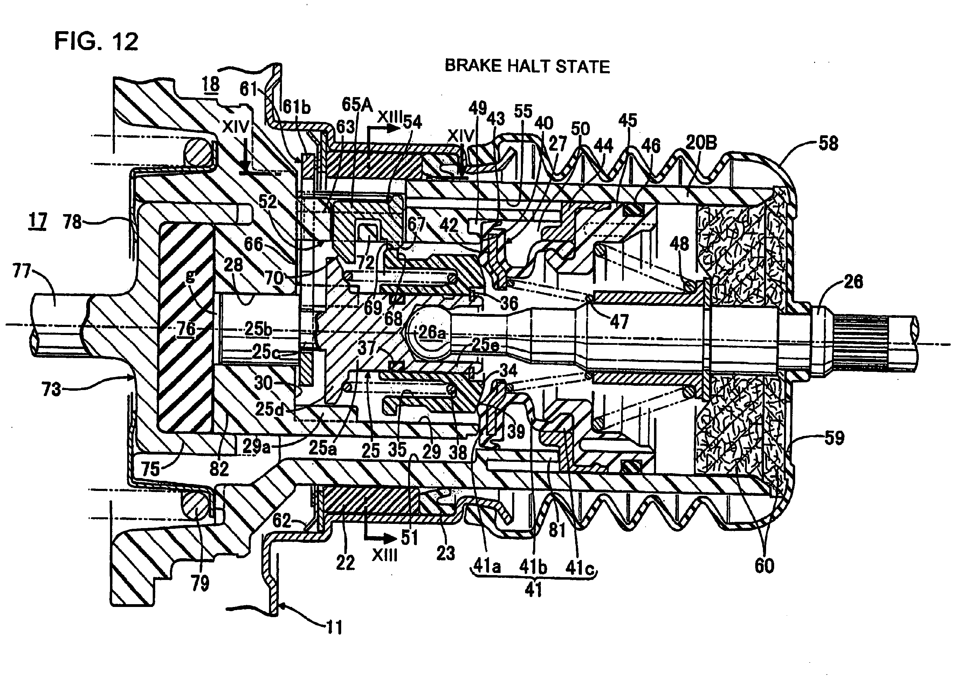

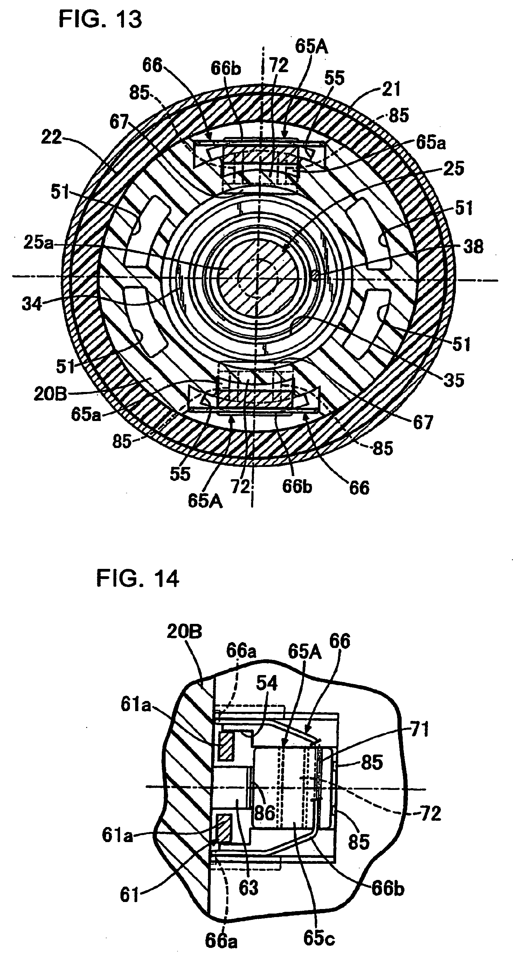

Fig. 12 through Fig. 14 show a second embodiment of the present invention.

It is noted that parts corresponding to those of the first embodiment are given the same reference numbers and letters only for illustration, with a detailed description omitted here.

A valve cylinder 20B is slidably supported at a guide tubular portion 21 via a bearing member 22 and a seal member 23. The guide tubular portion 21 is provided in a projecting manner at a central part of a rear shell half body 11b to extend backward. The valve cylinder 20B is provided with an annular raised portion 81 and an annular portion 82 and formed in a shape similar to the valve cylinder 20A of the above-described first embodiment. Connecting pieces 65A identical in shape to those of the first embodiment are slidably fitted into radially communicating holes 54 provided at two locations evenly spaced in a circumferential direction of the valve cylinder 20B.

Faces on both sides of the connecting piece 65A along the circumferential direction of the valve cylinder 20B are allowed to be in contact in a sliding manner with the inner face of the radially communicating hole 54. Thus, the connecting piece 65A is blocked from making a circumferential relative movement with respect to the valve cylinder 20B but is able to make a slight axial relative movement with respect to the valve cylinder 20B and slidably fitted into the radially communicating hole 54.

A resilient member 66 for resiliently urging each of the connecting pieces 65A toward the valve piston 34 inwardly along the radial direction of the valve cylinder 20B are provided between the connecting pieces 65A and the valve cylinder 20B. The rear parts of pressing portions 66b at the resilient members 66 are in contact with connection portions 65c of the connecting pieces 65A, and the connecting pieces 65A are resiliently urged toward the valve piston 34.

Sliding projections 85, 85, 86 which are in contact with the connecting pieces 65A to guide the sliding operation of these connecting pieces 65A are provided on the valve cylinder 20B. A pair of sliding projections 85, 85 are provided in a projecting manner from the inner face of the radially communicating holes 54 so as to sliding contact with the rear face of the connecting pieces 65A inside the radially communicating holes 54, and arranged so as to extend in parallel along the radial direction of the valve cylinder 20B. Further, the sliding projection 86 is protrudingly provided at projections 63 which project backward from the front end faces of the radially communicating holes 54 so as to sliding contact with the front faces of the connecting pieces 65A inside the radially communicating holes 54.

Further, the sliding projections 85, 85, 86 are set to be lower in hardness than the connecting pieces 65A which are allowed to be in contact in a sliding manner with these sliding projections 85, 85, 86. In the second embodiment, the valve cylinder 20B is made with a synthetic resin such as a polybutylene terephthalate (PBT) resin, for example, whereas the connecting pieces 65A are formed with a synthetic resin higher in hardness than the valve cylinder 20B, for example, a polyphthalamide (PPA) resin.

According to the above-described second embodiment, the same effects as those of the first embodiment can be obtained. Further, sliding projections 85, 85, 86 provided on the valve cylinder 20B contact with the connecting pieces 65A to guide a sliding operation of the connecting pieces 65A, and the connecting pieces 65A slide on the valve cylinder 20B in a smaller sliding area to reduce the sliding resistance, thereby the connecting pieces 65A can be operated to slide smoothly.

Further, the sliding projections 85, 85, 86 are lower in hardness than the connecting pieces 65A which are allowed to sliding contact with the sliding projections 85, 85, 86. Therefore, wear is more likely to result from the sliding of the connecting pieces 65A on the sliding projections 85, 85, 86, thus making it possible to prevent the sliding projections 85, 85, 86 from biting into the connecting pieces 65A and secure a stable sliding operation of the connecting pieces 65A.

For making the sliding projections 85, 85, 86 lower in hardness than the connecting pieces 65A, the valve cylinder 20B may be made of synthetic resin and the connecting pieces 65A may be made of metal.

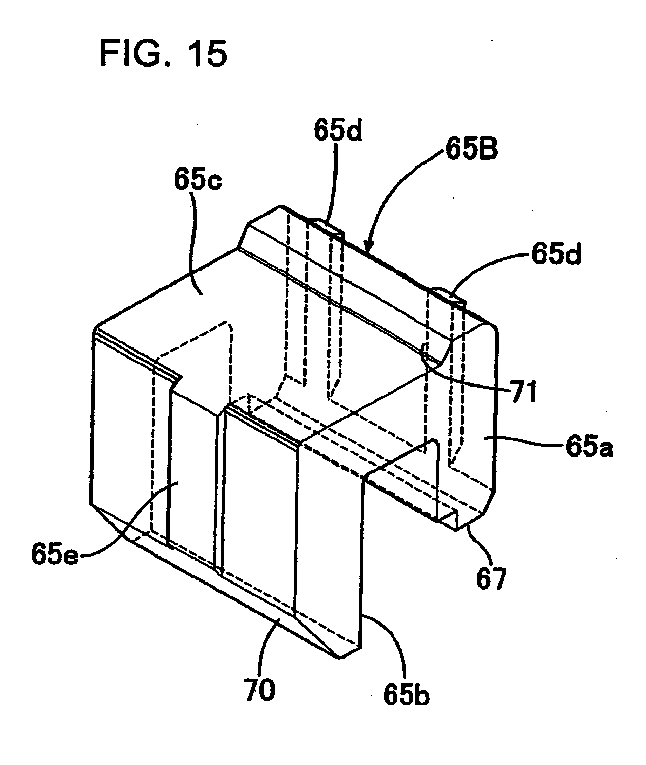

Fig. 15 shows a connecting piece of a third embodiment of the present invention in which sliding projections 65d, 65d, 65e are provided on a connecting piece 65B.
More specifically, the connecting piece 65B is fitted into a radially communicating hole 54 (refer to the first and second embodiments) of the valve cylinder 20A so as to slide similarly in the first embodiment and provided with a rear arm portion 65a, a front arm portion 65b and a connection portion 65c in an integrated manner as with the connecting piece 65A of the first and second embodiments. Further, a pair of sliding projections 65d, 65d which can slide contact with the inner face of the radially communicating hole 54 are provided integrally in a projecting manner at the rear face of the connecting piece 65B so as to extend in parallel in the radial direction of the valve cylinder 20A, and a sliding projection 65e which can slide contact with the rear face of the projection 63 (refer to the first and second embodiments) inside the radially communicating hole 54 is provided integrally in a projecting manner on the front face of the connecting piece 65B so as to extend in the radial direction of the valve cylinder 20A.

Further, the sliding projections 65d, 65d, 65e are set to be lower in hardness than the valve cylinder 20A which slidingly contact with these sliding projections 65d, 65d, 65e. In the third embodiment, the valve cylinder 20A is formed with a polyphthalamide (PPA) resin, for example, whereas the connecting piece 65B is formed with a synthetic resin, which is lower in hardness than the valve cylinder 20A, such as a polybutylene terephthalate (PBT) resin, for example.

The third embodiment is also able to obtain the same effects as those of the second embodiment.

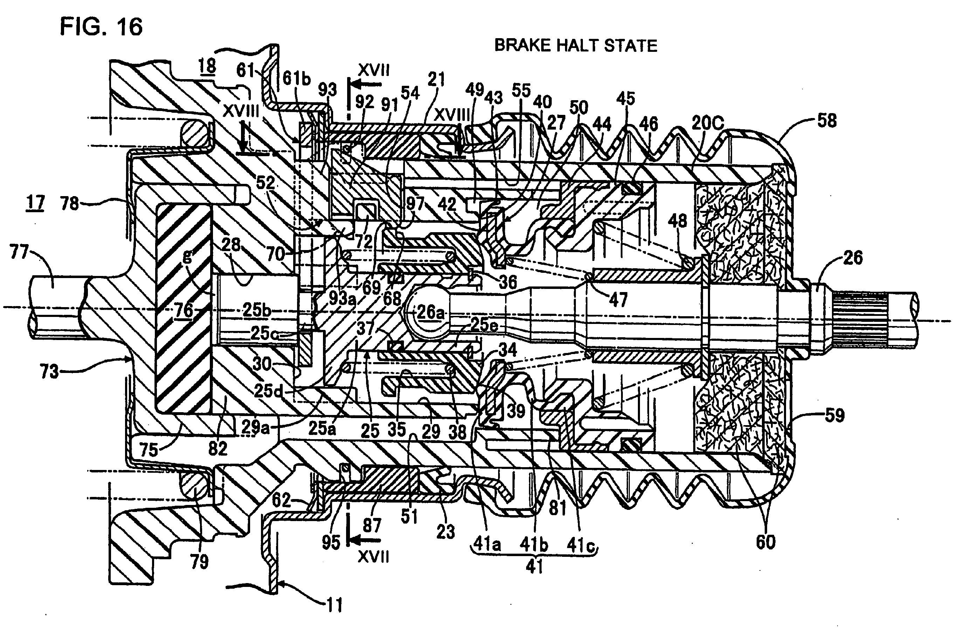

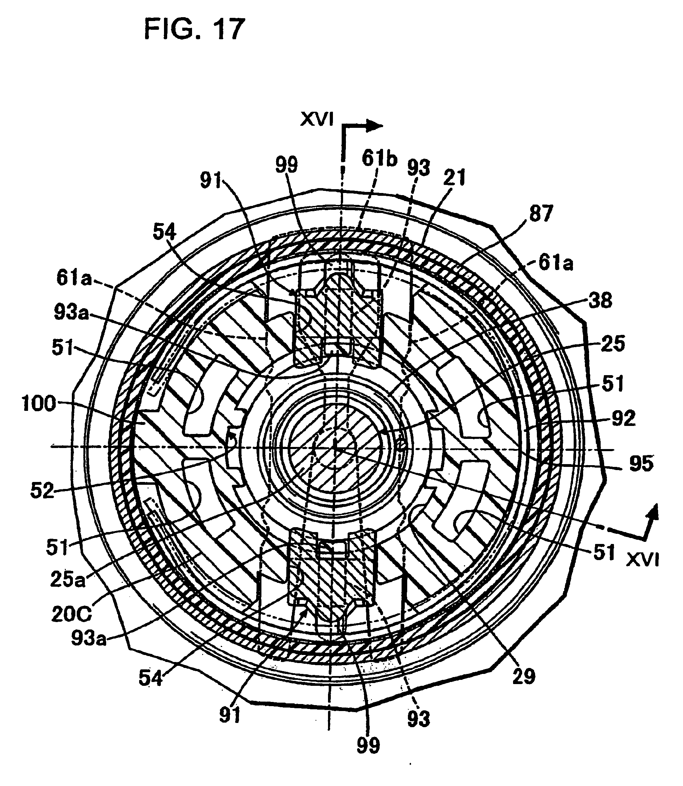

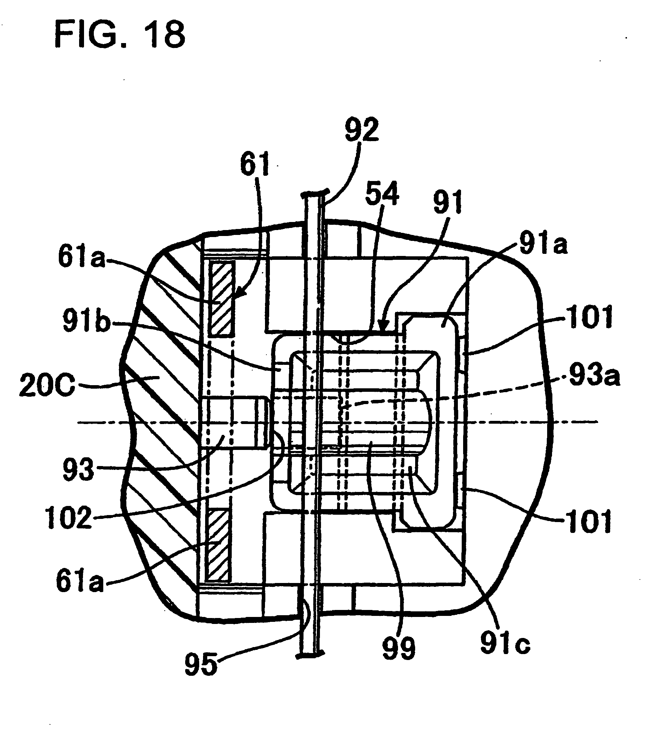

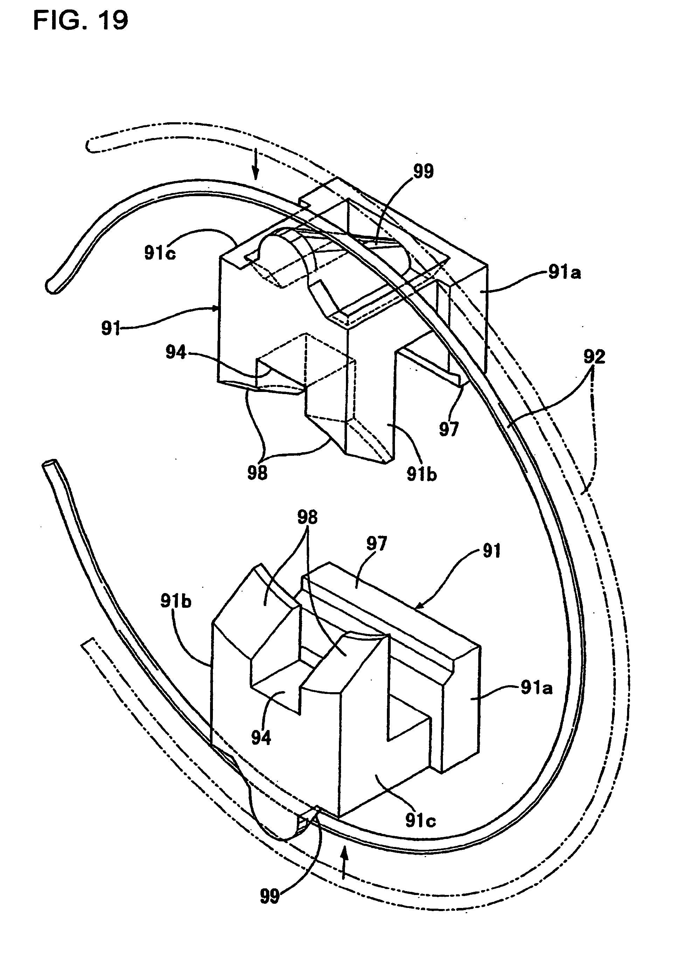

Fig. 16 through Fig. 19 show a fourth embodiment of the present invention.

It is noted that parts corresponding to those of the first embodiment are given the same reference numbers and letters only for illustration, with a detailed description omitted here.

A valve cylinder 20C is slidably supported via a bearing member 87 and a seal member 23 at a guide tubular portion 21 provided in a projecting manner at the central part of the rear shell half body 11b to extend backward. The valve cylinder 20C is provided with an annular raised portion 81 and an annular portion 82 and formed in a shape similar to the valve cylinder 20A, 20B of the above-described first and second embodiments. Connecting pieces 91 are fitted into radially communicating holes 54 provided at two locations evenly spaced in the circumferential direction of the valve cylinder 20C so as to slide.

The front end faces of the radially communicating holes 54 along the axial direction of the valve cylinder 20C continue so as to be flush with a step 30 between a cylinder hole 28 and an accommodation hole 29. Projections 93 which project backward from the front end faces of the radially communicating holes 54 are provided integrally in a projecting manner on the valve cylinder 20C so as to be positioned at the central part of the radially communicating holes 54 along the circumferential direction of the valve cylinder 20C. A key 61 is inserted into radially communicating holes 54 so as to hold the projections 93 between a pair of regulation portions 61a, 61a. Further, regulation portions 93a which project backward are provided integrally at the inner ends of the projections 93 along the radial direction of the valve cylinder 20C.

A connecting piece 91 is integrally provided with a rear arm portion 91a and a front arm portion 91b arranged to be spaced along the axial direction of the valve cylinder 20C; and a connection portion 91c connecting the outer end of the rear arm portion 91a with that of the front arm portion 91b along the radial direction of the valve cylinder 20C. And, it is formed approximately in a U-letter shape which is opened inwardly in the radial direction of the valve cylinder 20C.

The connecting piece 91 is fitted into the radially communicating hole 54 so as to slide by allowing the rear arm portion 91a to oppose to the rear end face of the radially communicating hole 54 along the axial direction of the valve cylinder 20C and also allowing the front arm portion 91b to oppose to the projection 93. A recess 94 into which the regulation portion 93a is inserted is provided at the front arm portion 91b.

The faces on both sides of the connecting piece 91 along the circumferential direction of the valve cylinder 20C slidingly contact with the inner face of the radially communicating hole 54. The connecting piece 91 is blocked from making a circumferential relative movement with respect to the valve cylinder 20C but is able to make a slight axial relative movement with respect to the valve cylinder 20C, and slidably fitted into the radially communicating hole 54.

A resilient member 92 for urging resiliently each of the connecting pieces 91 toward the valve piston 34 inwardly along the radial direction of the valve cylinder 20C is provided between the connecting pieces 91 and the valve cylinder 20C. The resilient member 92 is formed in a circular-arc shape and commonly urging a pair of connecting pieces 91, 91. The resilient member 92 is attached to an attachment groove 95, which is formed on an outer circumference of the valve cylinder 20C so as to correspond to an opening part on the outer ends of the radially communicating holes 54. Further, a stopper 100, which contacts both circumferential ends of the resilient member 92 for regulating the circumferential movement of the resilient member 92, is provided on the valve cylinder 20C. The attachment groove 95 is formed in a circular-arc shape so as to hold the stopper 100 provided on the outer circumference of the valve cylinder 20C between the both circumferential ends thereof.

The resilient member 92 contacts with the connection portions 91c of the connecting pieces 91, and the connecting pieces 91 are resiliently urged toward the valve piston 34. Engagement portions 97, which engages from backward with an annular latch portion 68 provided on the outer circumference of the valve piston 34, are provided at the inner end parts of the rear arm portions 91a of the connecting pieces 91. These engagement portions 97 are allowed to slidingly contact with a sliding face 69 arranged forward more than the latch portion 68 and provided on the outer circumference of the valve piston 34.

Then, the latch portion 68 allows the engagement portions 97 of the connecting pieces 91 to be engaged at the time of the emergency brake operation, thereby keeping constant an axial relative position of the valve piston 34 with respect to the valve cylinder 20C. Here, at the time of the emergency brake operation, the input piston 25 and the valve piston 34 advance more than a predetermined stroke with respect to the valve cylinder 20C. And, in a state that the engagement portions 97 are engaged with the latch portions 68, the valve piston 34 is connected in such a manner as to be substantially fixed to the valve cylinder 20C. Further, at the time of the non-emergency brake operation, the engagement portions 97 slidingly contact with the sliding faces 69.

Inclined faces 98 which are inclined so as to be positioned outwardly along the radial direction of the valve cylinder 20C toward forward are formed so as to face forward at inner end parts of the front arm portions 91b of the connecting piece 91. In other words, the inclined face 98 is inclined so that a diameter of an inner diameter portion thereof at a front side is larger than a diameter of the inner diameter portion thereof at a rear side.
On the other hand, during the application of the brake, a flange portion 25d provided at the input piston 25 is positioned at a front side of the inclined faces 98; while at the time of release of the emergency brake operation, the flange portion 25d contacts with the inclined faces 98 in accordance with the backward motion of the input piston 25 with respect to the valve piston 34, thereby allows the connecting pieces 91 to move outwardly in the radial direction of the valve cylinder 20C so that the engagement portions 97 can be disengaged from the latch portions 68.

A pressure receiving face 99 is provided on the connecting pieces 91. The pressure receiving face 99 contacts with the resilient member 92 and receives a resilient force from the resilient members 92 so that the connecting pieces 91 are urged inwardly in the radial direction of the valve cylinder 20C and forward or backward in the axial direction thereof.
In the fourth embodiment, the resilient members 92 contact with the connection portions 91c of the connecting pieces 91. Tapered pressure receiving faces 99 which are inclined so as to be spaced away from the axial line of the valve cylinder 20C toward forward are provided at the connection portion 91c. The resilient member 92 contacts with the pressure receiving faces 99, by which the connecting pieces 91 are urged radially inwardly of the valve cylinder 20C and axially forward.

As described above, the connecting pieces 91 are urged inwardly in the radial direction of the valve cylinder 20C due to a resilient force of the resilient members 92 and also urged backward along the axial direction of the valve cylinder 20C, thus making it possible to prevent the connecting pieces 91 from moving loosely in the axial direction of the valve cylinder 20C. Thus, it is possible to secure a smooth operation of the connecting pieces 91 and stabilize brake assistance characteristics.

Sliding projections 101, 101, 102 which contact with the connecting pieces 91 to guide a sliding operation of the connecting pieces 91 are provided on the valve cylinder 20C. A pair of the sliding projections 101, 101 are provided so as to project from the inner face of a radially communicating hole 54 for slidingly contacting with the rear face of the connecting piece 91 inside the radially communicating hole 54. Further, the pair of the sliding projections 101, 101 are arranged so as to extend in parallel along the radial direction of the valve cylinder 20C. Further, the sliding projection 102 is provided on projections 93 so as to project backward from the front end face of the radially communicating holes 54 for slidingly contacting with the front faces of the connecting pieces 91 inside the radially communicating hole 54.

Further, the sliding projections 101, 101, 102 are set to be lower in hardness than the connecting pieces 91 which slide and contact with the sliding projections 101, 101, 102. In the fourth embodiment, for example, the valve cylinder 20C is made of synthetic resin such as a polybutylene terephthalate (PBT) resin, whereas the connecting pieces 91 are made of synthetic resin higher in hardness than the valve cylinder 20C, such as a polyphthalamide (PPA) resin.

According to the above-described fourth embodiment, the same effects as those of the second embodiment can be obtained, and also the single resilient member 92 which is formed in the circular-arc shape and commonly urges the pair of the connecting pieces 91 is attached to the attachment groove 95 formed on the outer circumference of the valve cylinder 20C while contacting with each of the connecting pieces 91, thus making it possible to reduce the number of components.

Further, the stopper 100 which contacts with both circumferential ends of the resilient member 92 for regulating the circumferential movement of the resilient member 92 is provided on the valve cylinder 20C, and the resilient member 92 can be easily positioned in the circumferential direction to improve the assembly performance.

A description has been so far made for embodiments of the present invention, to which the present invention shall not be, however, limited. The present invention may be modified in design in various ways without departing from the scope of the present invention, which is described in the appended claims.

## Claims

1. A vacuum pressure booster, comprising:
a booster shell (11);
a booster piston (15) accommodated within the booster shell (11) and dividing an interior of the booster shell (11) into a front side and a rear side, the front side being a vacuum pressure chamber (17) connected to a vacuum pressure source (V) and the rear side being an operating chamber (18);
a valve cylinder (20A, 20B, 20C) which is continuously formed on the booster piston (15) and is slidably supported on a rear wall of the booster shell (11);
an input rod (26) adapted to move in an axial direction;
an input return spring (48) which urges the input rod (26) backward;
an input piston (25) connected with the input rod (26) so as to move interlockingly with the input rod (26);
a valve piston (34) fitted into the input piston (25) so as to slide forward from a predetermined backward position with respect to the input piston (25);
a set spring (38) which is disposed between the input piston (25) and the valve piston (34) and urges the valve piston (34) toward the backward position; and
a control valve (27) comprising:
an air-introducing valve seat (39) which is formed at the valve piston (34) and communicates with an outside atmosphere; and
a vacuum pressure introducing valve seat (40) which is formed at the valve cylinder (20A, 20B, 20C) and communicates with the vacuum pressure chamber (17);
the control valve (27) switching a communication between the operating chamber (18) and the vacuum pressure chamber (17) to a communication between the outside atmosphere and the operating chamber (18) in accordance with axial movement of the input rod (26);
an output rod (77) slidably supported on a front wall of the booster shell (11); and
a reaction-force mechanism (73) which transmits to the output rod (77) a combined force of operation force inputted from the input rod (26) and thrust force of the booster piston (15) resulting from pressure difference between the operating chamber (18) and the vacuum pressure chamber (17), the reaction-force mechanism (73) being disposed among the valve cylinder (20A, 20B, 20C), the input piston (25) and the output rod (77),
wherein the input rod (26), the input return spring (48), the input piston (25), the valve piston (34), the set spring (38) and the control valve (27) are disposed within the valve cylinder (20A, 20B, 20C)
the vacuum pressure booster being **characterized in that**:
wherein connecting pieces (65A, 65B, 91) are slidably fitted to a plurality of locations in a circumferential direction of the valve cylinder (20A, 20B, 20C) while freely moving in a radial direction of the valve cylinder (20A, 20B, 20C),
wherein an engagement portion (67, 97) is provided at each of an inner end part of the connecting pieces (65A, 65B, 91),
wherein a resilient member (66, 92), which urges each of the connecting pieces (65A, 65B, 91) toward the valve piston (34) in the radial direction, is disposed between the valve cylinder (20A, 20B, 20C) and each of the connecting pieces (65A, 65B, 91),
wherein a latch portion (68) is provided on outer circumference of the valve piston (34),
wherein a sliding face (69) is provided on the outer circumference at a front side of the latch portion (68),
wherein at a time of an emergency brake operation, the input piston (25) and the valve piston (34) advance more than a predetermined stroke with respect to the valve cylinder (20A, 20B, 20C),
wherein at the time of emergency brake operation, the engagement portions (67, 97) of the connecting pieces (65A, 65B, 91) engage with the latch portion (68) so as to connect the valve piston (34) with the valve cylinder (20A, 20B, 20C) while keeping constant an axial interval between the valve piston (34) and the valve cylinder (20A, 20B, 20C), and
wherein at a time of not emergency brake operation, the engagement portions (67, 97) of the connecting pieces (65A, 65B, 91) slides along the sliding face (69) so that the valve piston (34) moves in the axial direction relative to the valve cylinder (20A, 20B, 20C).

2. The vacuum pressure booster as set forth in claim 1, wherein
an inclined face (70, 98) is formed on the connecting piece (65A, 65B, 91) so as to face forward so that a diameter of an inner diameter portion thereof at a front side is larger than a diameter of the inner diameter portion thereof at a rear side,
a flange portion (25d) is monolithically formed with the input piston (25), during a brake operation state, the flange portion (25d) is positioned a front side of the inclined faces (70, 98), and
when releasing the emergency brake operation, the flange portion (25d) contacts with the inclined face (70, 98) in accordance with backward motion of the input piston (25) so as to move the connecting pieces (65A, 65B, 91) to radially outwardly of the valve cylinder (20A, 20B, 20C) for disengaging the engagement portion (67) from the latch portion (68).

3. The vacuum pressure booster as set forth in claim 1 or claim 2, wherein
the resilient member (92)is a single and circular-arc shape member, and
the resilient member (92) is attached to an attachment groove (95) formed on an outer circumference of the valve cylinder (20C) while contacting with each of the connecting pieces (91).

4. The vacuum pressure booster as set forth in any one of claim 1 to claim 3, wherein
a pressure receiving face (71, 99) is provided on the connecting pieces (65A, 65B, 91), and
the pressure receiving face (71, 99) contacts with the resilient member (66, 92), receives resilient force from the resilient member (66, 92) and urges the connecting pieces (65A, 65B, 91) radially inwardly of the valve cylinder (20A, 20B, 20C) and axially forwardly or rearwardly.

5. The vacuum pressure booster as set forth in claim 4, wherein
a rotation stopper (100) is provided on the valve cylinder (20C),
the rotation stopper (100) is in contact with both circumferential ends of the resilient member (92) to regulate a circumferential movement of the resilient member (92).

6. The vacuum pressure booster as set forth in any one of claim 1 to claim 5, wherein
a sliding projection (85, 86; 65d, 65e; 101, 102) is provided on either one of the valve cylinder and the connecting pieces (20B, 65B, 20C), and
the sliding projection (85, 86; 65d, 65e; 101, 102) contacts with the other of the valve cylinder and the connecting pieces (65A, 20A, 91) to guide a sliding operation of the connecting pieces (65A, 65B, 91).

7. The vacuum pressure booster as set forth in claim 6, wherein
a hardness of the sliding projection (85, 86; 65d, 65e; 101, 102) is set lower than a hardness of the other of the valve cylinder and the connecting pieces (65A, 20A, 91).

## Patentansprüche

1. Vakuumbremskraftverstärker mit
einer Verstärkerhülle (11),
einem Verstärkerkolben (15), der innerhalb der Verstärkerhülle (11) vorgesehen ist und ein Inneres der Verstärkerhülle (11) in eine vordere Seite und eine hintere Seite aufteilt, wobei die vordere Seite eine Vakuumdruckkammer (17) ist, die mit einer Vakuumdruckquelle (V) verbunden ist, und die hintere Seite eine Betriebskammer (18) ist,
einem Ventilzylinder (20A, 20B, 20C), der übergangslos an dem Verstärkerkolben (15) ausgebildet ist und gleitbar an einer hinteren Wand der Verstärkerhülle (11) abgestützt ist,
einer Eingabestange (26), die dafür vorgesehen ist, sich in einer axialen Richtung zu bewegen,
einer Eingaberückführfeder (48), welche die Eingabestange (26) zurückdrückt,
einem Eingabezylinder (25), der mit der Eingabestange (26) verbunden ist, um sich so mit der Eingabestange (26) verschränkt zu bewegen,
einem Ventilkolben (34), der in den Eingabezylinder (25) so eingepasst ist, dass er von einer vorher festgelegten hinteren Position im Bezug auf den Eingabekolben (25) nach vorne gleitet,
einer Einstellfeder (38), die zwischen dem Eingabekolben (25) und dem Ventilkolben (34) vorgesehen ist und den Ventilkolben (34) zu der hinteren Position drückt, und
ein Kontrollventil (27) mit:
einem Luft einführenden Ventilsitz (39), der an dem Ventilkolben (34) ausgebildet ist und mit einer äußeren Atmosphäre in Verbindung steht, und
einen Vakuumdruckeinführventilsitz (40), der an dem Ventilzylinder (20A, 20B, 20C) ausgebildet ist und mit der Vakuumdruckkammer (17) in Verbindung steht,
wobei das Kontrollventil (27) eine Verbindung zwischen der Betriebskammer (18) und der Vakuumdruckkammer (17) zu einer Verbindung zwischen der äußeren Atmosphäre und der Betriebskammer (18) in Übereinstimmung mit der axialen Bewegung der Eingabestange (26) schaltet,
einer Ausgabestange (77), die gleitbar an einer Vorderwand der Verstärkerhülle (11) abgestützt ist, und
einem Reaktionskraftmechanismus (73), der an die Ausgabestange (77) ein kombinierte Kraft der Betriebskraft, die von der Eingabestange (26) ausgegeben wird, und einer Druckkraft des Verstärkerkolbens (15), die sich aus der Druckdifferenz zwischen der Betriebskammer (18) und der Vakuumdruckkammer (17) ergibt, überträgt, wobei der Reaktionskraftmechanismus (73) zwischen dem Ventilzylinder (20A, 20B, 20C), dem Eingabekolben (25) und der Ausgabestange (77) vorgesehen ist,
wobei die Eingabestange (26), die Eingaberückführfeder (48), der Eingabekolben (25), der Ventilkolben (34), die Einstellfeder (38) und das Kontrollventil (27) innerhalb des Ventilzylinders (20A, 20B, 20C) vorgesehen sind,
wobei der Vakuumbremskraftverstärker **dadurch gekennzeichnet ist, dass**
die Verbindungsstücke (65A, 65B, 91) gleitbar an mehreren Positionen in einer Umfangsrichtung des Ventilzylinders (20A, 20B, 20C) angeordnet sind während sie in einer radialen Richtung des Ventilzylinders (20A, 20B, 20C) frei beweglich sind,
ein Eingriffsabschnitt (67, 97) an jedem inneren Endteil der Verbindungsstücke (65A, 65B, 91) vorgesehen ist,
ein nachgebiges Stück (66, 92), das jedes der Verbindungsstücke (65A, 65B, 91) zu dem Ventilkolben (34) in der radialen Richtung hin drückt, zwischen dem Ventilzylinder (20A, 20B, 20C) und jedem der Verbindungsstücke (65A, 65B, 91) vorgesehen ist,
wobei ein Laschenabschnitt (68) auf einem äußeren Umfang des Ventilkolbens (34) vorgesehen ist,
wobei eine Gleitfläche (69) auf dem äußeren Umfang an einer Vorderseite des Laschenabschnitts (68) vorgesehen ist,
wobei zu einem Zeitpunkt eines Notbremsbetriebs der Eingabekolben (25) und der Ventilkolben (34) sich um mehr als einen vorher festgelegten Hub bezüglich des Ventilzylinders (20A, 20B, 20C) nach vorne bewegen,
wobei zu dem Zeitpunkt des Notbremsbetriebs die Eingriffsabschnitte (67, 97) der Verbindungsstücke (65A, 65B, 91) mit dem Laschenabschnitt (68) in Eingriff treten, um den Ventilkolben (34) mit dem Ventilzylinder (20A, 20B, 20C) zu verbinden während ein axialer Abstand zwischen dem Ventilkolben (34) und dem Ventilzylinder (20A, 20B, 20C) konstant gehalten wird, und
wobei zu einem Zeitpunkt von keinem Notbremsbetrieb die Eingriffsabschnitte (67, 97) der Verbindungsstücke (65A, 65B, 91) entlang der Gleitfläche (69) gleiten, so dass sich der Ventilkolben (34) in der axialen Richtung bezüglich des Ventilzylinders (20A, 20B, 20C) bewegt.

2. Vakuumbremskraftverstärker nach Anspruch 1, wobei
eine geneigte Fläche (70, 98) an dem Verbindungsstück (65A, 65B, 91) so ausgebildet ist, dass sie nach vorne zeigt, so dass ein Durchmesser eines inneren Durchmesserabschnitts davon an einer Vorderseite größer als ein Durchmesser des inneren Durchmesserabschnitts davon an einer hinteren Seite ist,
ein Flanschabschnitt (25d) einstückig mit dem Eingabekolben (25) ausgebildet ist,
während eines Bremsbetriebszustands der Flanschabschnitt (25d) an einer Vorderseite der geneigten Flächen (70, 98) positioniert ist, und
wenn der Notbremsbetrieb aufgelöst wird, der Flanschabschnitt (25d) die geneigte Fläche (70, 98) in Übereinstimmung mit einer Rückwärtsbewegung des Eingabekolbens (25) kontaktiert, um die Verbindungsstücke (65A, 65B, 91) radial außerhalb des Ventilzylinders (20A, 20B, 20C) zu bewegen, um den Eingriffsabschnitt (67) aus dem Eingriff mit dem Laschenabschnitt (68) zu bringen.

3. Vakuumbremskraftverstärker nach Anspruch 1 oder 2, wobei
das nachgebige Element (92) ein einzelnes und kreisbogenförmiges Element ist, und
das nachgebige Element (92) an einer Befestigungsnut (95), die an einem äußeren Umfang des Ventilzylinders (20C) ausgebildet ist, während sie jedes der anderen Verbindungsstücke (91) kontaktiert, befestigt ist.

4. Vakuumbremskraftverstärker nach einem der Ansprüche 1 bis 3, wobei
eine Druckempfangsfläche (71, 99) an den Verbindungsstücken (65A, 65B, 91) vorgesehen ist, und
die Druckempfangsfläche (71, 99) mit dem nachgebigen Element (66, 92) kontaktiert, eine nachgebige Kraft von dem nachgebigen Element (66, 92) empfängt und die Verbindungsstücke (65A, 65B, 91) von dem Ventilzylinder (20A, 20B, 20C) radial nach innen und axial nach vorne oder nach hinten drückt.

5. Vakuumbremskraftverstärker nach Aspruch 4, wobei
ein Drehstopper (100) an dem Ventilzylinder (20C) vorgesehen ist,
der Drehstopper (100) im Kontakt mit beiden Umfangsenden des nachgebigen Elements (92) steht, um eine Umfangsbewegung des nachgebigen Elements (92) zu regulieren.

6. Vakuumbremskraftverstärker nach einem der Ansprüche 1 bis 5, wobei
ein Gleitvorsprung (85, 86, 65d, 65e, 101, 102) sowohl auf dem Ventilzylinder als auch den Verbindungsstücken (20B, 65B, 20C) vorgesehen ist und
der Gleitvorsprung (85, 86, 65d, 65e, 101, 102) den jeweils anderen des Ventilzylinders und der Verbindungsstücke (65A, 20A, 91) kontaktiert, um eine Gleitoperation der Verbindungsstücke (65A, 65B, 91) zu lenken.

7. Vakuumbremskraftverstärker nach Anspruch 6, wobei
eine Härte des Gleitvorsprungs (85, 86, 65d, 65e, 101, 102) geringer als eine Härte des anderen des Ventilzylinders und der Verbindungsstücke (65A, 20A, 91) eingestellt ist.

## Revendications

1. Servomoteur à dépression, comprenant :
une coque de servomoteur (11) ;
un piston de servomoteur (15) accueilli dans la coque de servomoteur (11) et divisant un intérieur de la coque de servomoteur (11) en un côté avant et un côté arrière, le côté avant étant une chambre de dépression (17) connectée à une source de dépression (V) et le côté arrière étant une chambre d'actionnement (18) ;
un cylindre de soupape (20A, 20B, 20C) qui est formé continument sur le piston de servomoteur (15) et est supporté à coulissement sur une paroi arrière de la coque de servomoteur (11) ;
une tige d'entrée (26) adaptée pour se déplacer dans une direction axiale ;
un ressort de rappel d'entrée (48) qui pousse la tige d'entrée (26) vers l'arrière ;
un piston d'entrée (25) connecté avec la tige d'entrée (26) de façon à se déplacer en étant interconnecté avec la tige d'entrée (26) ;
un piston de soupape (34) ajusté dans le piston d'entrée (25) de façon à coulisser vers l'avant depuis une position vers l'arrière prédéterminée par rapport au piston d'entrée (25) ;
un ressort de réglage (38) qui est disposé entre le piston d'entrée (25) et le piston de soupape (34) et pousse le piston de soupape (34) vers la position vers l'arrière ; et
une soupape de commande (27) comprenant :
un siège de soupape d'introduction d'air (39) qui est formé au niveau du piston de soupape (34) et communique avec une atmosphère extérieure ; et
un siège de soupape d'introduction de dépression (40) qui est formé au niveau du cylindre de soupape (20A, 20B, 20C) et communique avec la chambre de dépression (17) ;
la soupape de commande (27) commutant une communication entre la chambre d'actionnement (18) et la chambre de dépression (17) vers une communication entre l'atmosphère extérieure et la chambre d'actionnement (18) en fonction du mouvement axial de la tige d'entrée (26) ;
une tige de sortie (77) supportée à coulissement sur une paroi avant de la coque de servomoteur (11) ; et
un mécanisme de force de réaction (73) qui transmet à la tige de sortie (77) une force combinée de la force d'actionnement entrée par la tige d'entrée (26) et de la force de poussée du piston de servomoteur (15) résultant de la différence de pression entre la chambre d'actionnement (18) et la chambre de dépression (17), le mécanisme de force de réaction (73) étant disposé parmi le cylindre de soupape (20A, 20B, 20C), le piston d'entrée (25) et la tige de sortie (77),
dans lequel la tige d'entrée (26), le ressort de rappel d'entrée (48), le piston d'entrée (25), le piston de soupape (34), le ressort de réglage (38) et la soupape de commande (27) sont disposés dans le cylindre de soupape (20A, 20B, 20C)
le servomoteur à dépression étant **caractérisé en ce que** :
dans lequel des pièces de connexion (65A, 65B, 91) sont ajustées à coulissement sur une pluralité d'emplacements dans une direction circonférentielle du cylindre de soupape (20A, 20B, 20C) tout en se déplaçant librement dans une direction radiale du cylindre de soupape (20A, 20B, 20C),
dans lequel une partie de prise (67, 97) est placée au niveau de chaque partie d'extrémité intérieure des pièces de connexion (65A, 65B, 91),
dans lequel un élément élastique (66, 92), qui pousse chacune des pièces de connexion (65A, 65B, 91) vers le piston de soupape (34) dans la direction radiale, est disposé entre le cylindre de soupape (20A, 20B, 20C) et chacune des pièces de connexion (65A, 65B, 91),
dans lequel une partie de verrouillage (68) est placée sur une circonférence extérieure du piston de soupape (34),
dans lequel une face de coulissement (69) est placée sur la circonférence extérieure au niveau d'un côté avant de la partie de verrouillage (68),
dans lequel à un moment d'un actionnement d'urgence du frein, le piston d'entrée (25) et le piston de soupape (34) avancent plus que d'une course prédéterminée par rapport au cylindre de soupape (20A, 20B, 20C),
dans lequel au moment de l'actionnement d'urgence du frein, les parties de prise (67, 97) des pièces de connexion (65A, 65B, 91) viennent en prise avec la partie de verrouillage (68) de façon à connecter le piston de soupape (34) avec le cylindre de soupape (20A, 20B, 20C) tout en gardant constant un intervalle axial entre le piston de soupape (34) et le cylindre de soupape (20A, 20B, 20C), et
dans lequel à un moment d'une opération de freinage non urgente, les parties de prise (67, 97) des pièces de connexion (65A, 65B, 91) coulissent le long de la face de coulissement (69) de telle manière que le piston de soupape (34) se déplace dans la direction axiale par rapport au cylindre de soupape (20A, 20B, 20C).

2. Servomoteur à dépression selon la revendication 1, dans lequel
une face inclinée (70, 98) est formée sur la pièce de connexion (65A, 65B, 91) de façon à être dirigée vers l'avant de telle manière qu'un diamètre d'une partie de diamètre intérieur de celle-ci en un côté avant est plus grand qu'un diamètre de la partie de diamètre intérieur de celle-ci en un côté arrière,
une partie de rebord (25d) est formée d'un seul bloc avec le piston d'entrée (25),
pendant un état d'actionnement du frein, la partie de rebord (25d) est positionnée en un côté avant des faces inclinées (70, 98), et
lors du relâchement de l'actionnement d'urgence du frein, la partie de rebord (25d) entre en contact avec la face inclinée (70, 98) selon le mouvement vers l'arrière du piston d'entrée (25) de façon à mouvoir les pièces de connexion (65A, 65B, 91) radialement vers l'extérieur du cylindre de soupape (20A, 20B, 20C) pour faire venir hors de prise la partie de prise (67) de la partie de verrouillage (68).

3. Servomoteur à dépression selon la revendication 1 ou la revendication 2, dans lequel
l'élément élastique (92) est un seul élément en forme d'arc circulaire, et
l'élément élastique (92) est fixé sur une rainure de fixation (95) formée sur une circonférence extérieure du cylindre de soupape (20C) tout en entrant en contact avec chacune des pièces de connexion (91).

4. Servomoteur à dépression selon l'une quelconque des revendications 1 à 3, dans lequel
une face de réception de pression (71, 99) est placée sur les pièces de connexion (65A, 65B, 91), et
la face de réception de pression (71, 99) entre en contact avec l'élément élastique (66, 92), reçoit la force élastique de l'élément élastique (66, 92) et pousse les pièces de connexion (65A, 65B, 91) radialement vers l'extérieur du cylindre de soupape (20A, 20B, 20C) et axialement vers l'avant ou vers l'arrière.

5. Servomoteur à dépression selon la revendication 4, dans lequel
un élément d'arrêt en rotation (100) est placé sur le cylindre de soupape (20C),
l'élément d'arrêt en rotation (100) est en contact avec les deux extrémités circonférentielles de l'élément élastique (92) pour réguler un mouvement circonférentiel de l'élément élastique (92).

6. Servomoteur à dépression selon l'une quelconque des revendications 1 à 5, dans lequel
une saillie coulissante (85, 86; 65d, 65e; 101, 102) est placée sur l'un du cylindre de soupape et des pièces de connexion (20B, 65B, 20C), et
la saillie coulissante (85, 86; 65d, 65e; 101, 102) entre en contact avec l'autre du cylindre de soupape et des pièces de connexion (20A, 65A, 91) pour guider une opération de coulissement des pièces de connexion (65A, 65B, 91).

7. Servomoteur à dépression selon la revendication 6, dans lequel
une dureté de la saillie coulissante (85, 86; 65d, 65e; 101, 102) est réglée inférieure à une dureté de l'autre du cylindre de soupape et des pièces de connexion (20A, 65A, 91).
